# EUROPEAN PATENT SPECIFICATION

(11) **EP 2 625 625 B1**
(45) Date of publication and mention of the grant of the patent: **18.11.2015**
(21) Application number: 11831448.3
(22) Date of filing: 04.10.2011
(51) Int. Cl.: G06F 15/173, H04L 29/06, H04L 29/12, H04L 29/08

(54) **Method and apparatus for dynamic traffic steering**
Verfahren und Vorrichtung für dynamische Verkehrssteuerung
Procédé et dispositif d'orientation de trafic dynamique

(30) Priority: 09.03.2011 US 201113044497; 06.01.2011 US 985686; 04.10.2010 US 389702 P
(43) Date of publication of application: 14.08.2013
(73) Proprietor: Openwave Mobility, Inc., Redwood City, CA 94063 (US)
(72) Inventor: MCGINNITY, Shaun, Belfast BT6 0HG (IE); WRIGHT, Stephen, Belfast BT8 6LD (IE); MCGLEENON, Patrick, BT34 1PD (GB); VENKATARAMANI, Ramkumar, Sunnyvale CA 94086 (US); DELANY, Mark, Sunnyvale CA 94087 (US)
(74) Representative: EIP
(86) International application number: PCT/US2011/054765
(87) International publication number: WO 2012/047885

(56) References cited:
- EP-A2- 0 992 922
- WO-A1-98/43177
- US-A1- 2007 028 000
- US-A1- 2007 192 863
- US-A1- 2008 276 003
- US-A1- 2008 279 200
- US-A1- 2009 037 976

## Description

### BACKGROUND

Advances in Internet and wireless technologies have triggered an exponential upsurge in the amount of content that is accessible by wireless devices. Different content types, such as video, audio, and webpages, pose different demands for quality of service (QOS). In order to improve QOS, traffic can be steered to certain delivery optimization resources. Typically, traffic is steered to optimization resources according to a static set of steering rules. For example, a static set of Uniform Resource Locators (URLs) is used to steer Hypertext Transfer Protocol (HTTP) requests for video content. However, the landscape of Internet delivered video changes rapidly, with hot websites and videos appearing and disappearing relatively quickly. Therefore, a static set of steering rules can become out-of-date in a short duration of time. When a static set of steering rules becomes out-of-date, some video data may be delivered to wireless devices without the benefit of the optimization resources that are available to improve QOS.

WO98/43177 describes a system for dynamically transcoding data transmitted between computers and is implemented in an apparatus for use in transmitting data between a network server and a network client. The system comprises a parser coupled to a transcode service provider. The parser is configured to selectively invoke the transcode service provider in response to a predetermined selection criteria.

### SUMMARY

According to the invention there is provided the method of claim 1.

According to the invention there is also provided the apparatus of claim 7.

According to the invention there is also provided the computer program of claim 13.

Other aspects and advantages of embodiments of the present invention will become apparent from the following detailed description, taken in conjunction with the accompanying drawings, illustrated by way of example of the principles of the invention.

### BRIEF DESCRIPTION OF THE DRAWINGS

Fig. 1 depicts a schematic block diagram of one embodiment of a content delivery system.
Fig. 2 depicts an embodiment of the traffic controller of Fig. 1.
Fig. 3 depicts the Open Systems Interconnection (OSI) model.
Fig. 4 depicts an exemplary IP packet.
Fig. 5 depicts an exemplary HTTP GET request message.
Fig. 6 depicts an exemplary HTTP response message.
Figs. 7-11 illustrate examples of operations of the traffic controller depicted in Fig. 2.
Fig. 12 depicts another embodiment of the traffic controller of Fig. 1.
Fig. 13 depicts a computer that includes a processor, memory, and a communications interface.
Fig. 14 is a process flow diagram of a method for dynamic traffic steering in accordance with an embodiment of the invention.
Fig. 15 depicts an embodiment of the traffic controller of Fig. 1 that includes a Domain Name System (DNS) proxy.
Fig. 16 depicts another embodiment of the traffic controller of Fig. 1 that includes a DNS proxy.
Fig. 17 depicts another embodiment of the traffic controller of Fig. 1 that includes a DNS proxy.
Fig. 18 depicts another embodiment of the traffic controller of Fig. 1 that includes a DNS proxy.
Fig. 19 depicts traffic steering assets of the traffic controller of Fig. 18.
Fig. 20 depicts an embodiment of the Domain-Based Steering Rules (DBSR) module of Fig. 18.
Fig. 21 depicts an embodiment of the IP-Based Steering Rules (IBSR) module of Fig. 18.
Fig. 22 illustrates an exchange of messages that is used to implement an operation of the traffic controller of Fig. 18.
Fig. 23 is a process flow diagram of a method for domain based dynamic traffic steering in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment. Rather, language referring to the features and advantages is understood to mean that a specific feature, advantage, or characteristic described in connection with an embodiment is included in at least one embodiment. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment. Thus, the phrases "in one embodiment," "in an embodiment," and similar language throughout this specification may, but do not necessarily, all refer to the same embodiment.

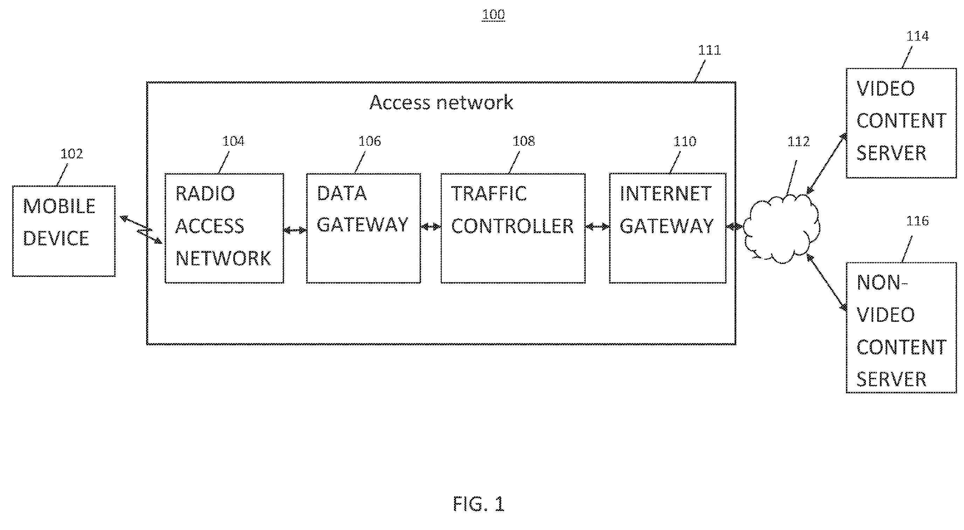

Fig. 1 depicts a schematic block diagram of one embodiment of a content delivery system 100. The content delivery system 100 depicted in Fig. 1 includes a mobile device 102, a radio access network 104, a data gateway 106, a traffic controller 108, an Internet gateway 110, the Internet 112, a video content server 114, and a non-video content server 116. Although the content delivery system is depicted and described with certain components and functionality, other embodiments of the content delivery system may include fewer or more components to implement less or more functionality. For example, the content delivery system may include more than one mobile device, more than one radio access network, more than one data gateway, more than one Internet gateway, more than one video content server, and/or more than one non-video content server.

The mobile device 102 of the content delivery system 100 is typically a handheld wireless device, such as a cell phone, a mobile phone, a smartphone, a pad computer, a Personal Digital Assistant (PDA), a handheld gaming device etc, which can wirelessly communicate using radio frequency (RF) communications signals. The mobile device can support various different RF communications protocols, including without limitation, Global System for Mobile communications (GSM), Universal Mobile Telecommunications System (UMTS), Code Division Multiple Access (CDMA), Worldwide Interoperability for Microwave Access (WiMax) and communications protocols as defined by the 3^{rd} Generation Partnership Project (3GPP) or the 3^{rd} Generation Partnership Project 2 (3GPP2), 4G Long Term Evolution (LTE) and IEEE 802.16 standards bodies. Although some wireless communications protocols are identified herein, it should be understood that present disclosure is not limited to the cited wireless communications protocols. The mobile device is configured to request content from the video content server 114 and/or the non-video content server 116 on behalf of a user and to render received content for displaying to the user. The user may be a single person, multiple persons, other entity or entities.

The radio access network 104 of the content delivery system 100 is configured to facilitate radio communications between the mobile device 102 and a core network that includes the data gateway 106, the traffic controller 108, the Internet gateway 110, the Internet 112, the video content server 114, and the non-video content server 116. In an embodiment, the radio access network includes one or more base stations to facilitate communications among mobile devices that are within a communication range of the base stations. Each base station has at least one RF transceiver and the base stations communicate with the mobile devices using RF communication signals. The radio access network facilitates network communications among multiple mobile stations within the same radio access network and between mobile stations in other radio access networks and provides interfaces to facilitate communications with other entities, such as a Public Switched Telephone Network (PSTN), a Wide Area Network (WAN), the Internet, Internet servers, hosts, etc., which are outside of the radio access network. In an embodiment, the network elements depicted in Fig. 1 are part of a wireless network that is operated by a single wireless service provider.

Data signals communicated between the mobile device 102 and the radio access network 104 include, but are not limited to, analog and/or digital RF signals (i.e., radio waves) for any type of communication mode, including text messaging, multimedia messaging, voice calling, and Internet browsing. The radio access network can support various different RF communications protocols, including without limitation, GSM, UMTS, CDMA, WiMax and communications protocols as defined by 3GPP, 3GPP2, or IEEE 802.16. Although some wireless communications protocols are identified herein, it should be understood that present disclosure is not limited to the cited wireless communications protocols.

Although the content delivery system 100 depicted in Fig. 1 includes the mobile device 102 and the radio access network 104, in other embodiments, the content delivery system includes a wired device instead of the mobile device and a wired communications network instead of the radio access network. The wired device may be a wired communications device that is configured to request content from the video content server 114 and/or the non-video content server 116 on behalf of a user and to render received content for displaying to the user. The wired communications network can facilitate communications between the wired communications device and the core network that includes the data gateway 106, the traffic controller 108, the Internet gateway 110, the Internet 112, the video content server 114, and the non-video content server 116. The wired device may be, for example, a computer equipped with an Ethernet card and the wired communications network may be an Ethernet local area network (LAN). In some embodiments, the content delivery system includes a combination of at least one mobile device, at least one radio access network, at least one wired device, and at least one wired communications network.

The data gateway 106 of the content delivery system 100 configures outgoing data access requests for use with one or more networks and configures incoming data for use by or display on the mobile device 102. As shown, the data gateway interfaces directly with the radio access network 104 and the traffic controller 108, although other embodiments may include other intermediate functional elements. In one embodiment, the data gateway uses GPRS Tunneling Protocol (GTP) to communicate with the radio access network. Other embodiments may use other communications protocols. Other conventional operations of the data gateway are known. For example, the data gateway enables users of mobile devices to roam between cells, for example, to move between different locations within the radio access network, by tracking the mobile device's identity across the network. The data gateway may also provide authentication and data formatting functions.

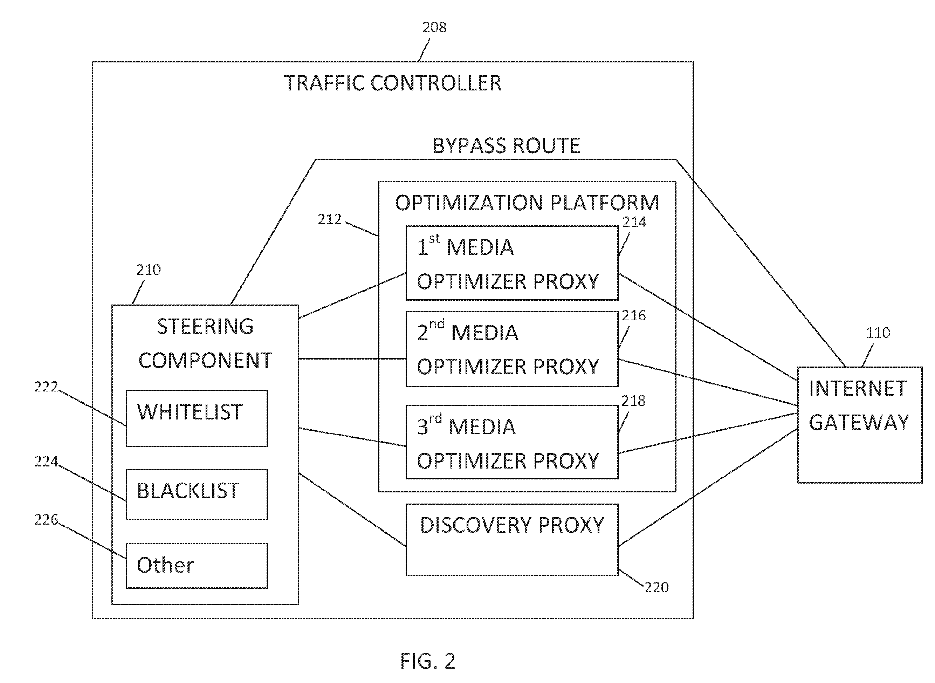

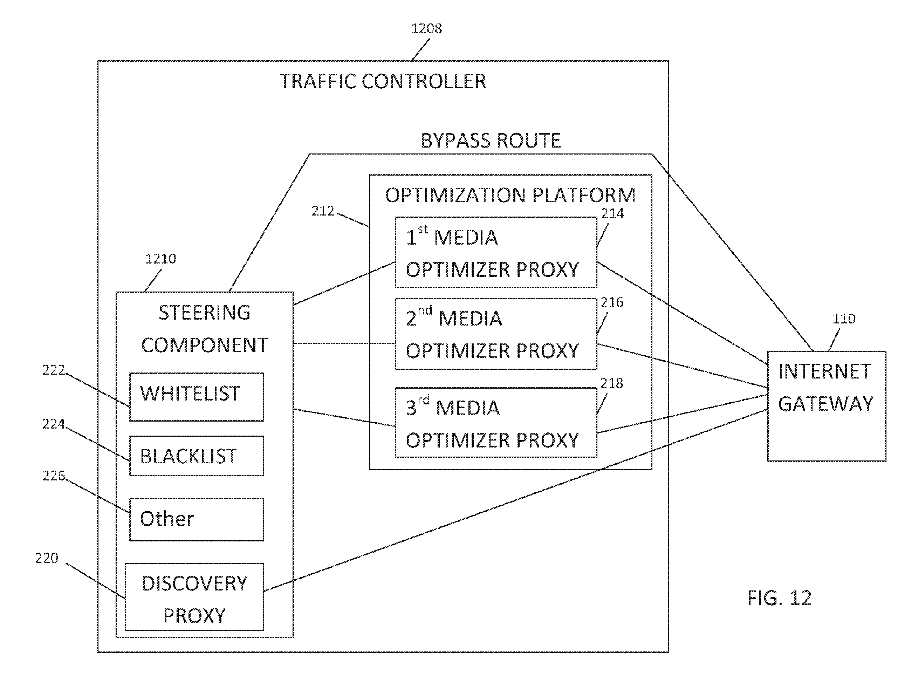

The traffic controller 108 of the content delivery system 100 is configured to monitor requests for content that are sent from the mobile device 102 to the video content server 114 and/or the non-video content server 116, to determine the content types of the requests, and to optimize the delivery of the requested content. The traffic controller acts as a proxy server between the mobile device and the video content server and/or the non-video content server and dynamically steers the traffic between the mobile device and the video content server and/or the non-video content server. Fig. 2 and Fig. 12 depict two embodiments of the traffic controller of Fig. 1.

In the embodiment depicted in Fig. 2, a traffic controller 208 includes a steering component 210, an optimization platform 212 that includes a first media optimizer proxy 214, a second media optimizer proxy 216, and a third media optimizer proxy 218, and a discovery proxy 220. Although the traffic controller is depicted and described with certain components and functionality, other embodiments of the traffic controller may include fewer or more components to implement less or more functionality. For example, the traffic controller may include more than one discovery proxy and the optimization platform may include less than three media optimizer proxies or more than three media optimizer proxies. In an embodiment, components of the traffic controller 208 are distributed among different devices in a network. For example, the steering component, the optimization platform, and the discovery proxy can be located in separate network devices and/or separate networks. In another example, the first, second and third media optimizer proxies are located in separate network devices and/or separate networks. As yet another example, instead of the media optimizer proxies, the optimization platform may include at least one packet modifying entity. The packet modifying entity can modify one or more packets carrying a request for content and/or one or more packets carrying a response to the request that is sent from the video content server 114 and/or the non-video content server 116. For example, the packet modifying entity may insert data into a packet, translate data in a packet, and/or delete data in a packet. The packet modifying entity can be located anywhere in the data path between the mobile device 102 and the video content server and/or in the data path between the mobile device and the non-video content server.

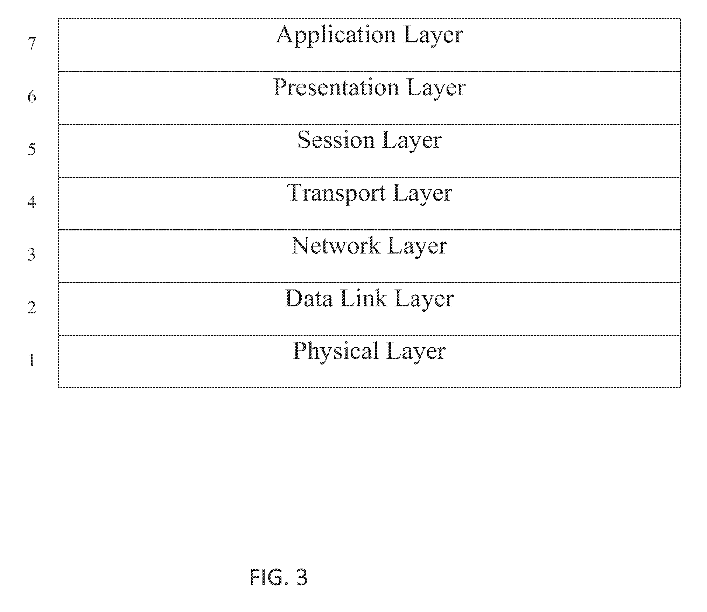

The steering component 210 of the traffic controller 208 is configured to maintain steering criteria for steering requests for content. The steering component may maintain steering criteria solely based on information from one layer of the Open Systems Interconnection (OSI) model, which is shown in Fig. 3, or based on information from more than one layer of the OSI model. As depicted in Fig. 3, the OSI model includes seven layers, which are Layer 1 (Physical Layer), Layer 2 (Data Link Layer), Layer 3 (Network Layer), Layer 4 (Transport Layer), Layer 5 (Session Layer), Layer 6 (Presentation Layer), and Layer 7 (Application Layer). In an embodiment, the steering component maintains steering criteria based on information found in at least one of Layer 3 (Network Layer,) Layer 4 (Transport Layer,) Layer 5 (Session Layer,) Layer 6 (Presentation Layer,) and Layer 7 (Application Layer) of the OSI model. For example, the steering component may maintain steering criteria that is solely or partially based on information from the Network Layer. In an embodiment, the steering component keeps a list of IP addresses that correspond to known video sites, such as YouTube.com, Google Videos, Metacafe.com, and Hulu.com, as the steering criteria. The steering component may store additional information such as IP address lifetime, destination port, source port, time-of-day, and day-of-week. The lifetime of an IP address is a time out period or an expiration date that the IP address will drop out of the steering criteria so that the IP address gets an opportunity for a re-evaluation by the discovery proxy 220 at least once every lifetime. The time-of-day is the time in a day that the steering component receives a request for content. The day-of-week is the day in a week that the steering component receives a request for content. Internet traffic may have a predictable traffic pattern with respect to the time-of-day and/or the day-of-week. The steering component can take advantage of the knowledge of the traffic pattern to make traffic steering decisions based on the time-of-day and/or day-of-week. For example, the evening may be a peak viewing time in which traffic loads are heavier. Thus, the steering component can steer a relatively large percentage of requests for delivery optimization in the evening. In another example, based on the day-of-week, the steering component can steer requests differently for week days and weekends. In an embodiment, the steering criteria may include a combination of IP addresses and port numbers that correspond to known video sites. In yet another embodiment, the steering criteria may include other IP header and/or network layer information that corresponds to known video sites. For example, the steering criteria may include an HTTP header, which identifies a potential video domain. The steering component can be installed at a customer premise, such as a data center of a wireless carrier. The steering criteria of different customer deployments of the steering component may be aggregated into a cloud service. In this case, the cloud service can provide initial steering criteria to a new customer deployment.

In the embodiment depicted in Fig. 2, the steering component 210 is connected to the Internet gateway 110 through the optimization platform 212, the discovery proxy, and through a bypass route. The steering component steers a request for content based on steering criteria contained in a whitelist 222, a blacklist 224, and an optional third category "other" 226. If a request for content matches information contained in the whitelist, the steering component directs the request to the optimization platform 212 for content delivery optimization. If a request for content matches information contained in the blacklist, the steering component does not direct the request to the optimization platform. Instead, the steering component directs the request to a bypass route, which does not include the optimization platform. If a request for content neither matches information contained in the whitelist nor matches information contained in the blacklist, the steering component directs the request to the discovery proxy 220. The discovery proxy implements a content discovery process in which a discovery proxy determines whether or not the returned content includes content of interest and adds information related to the request to either the whitelist or the blacklist. For example, if the returned content includes video, the discovery proxy adds the information of the request to the whitelist. If the returned content does not include video, the discovery proxy adds the information of the request to the blacklist.

In an embodiment, the whitelist 222, the blacklist 224 and the third category "other" 226 contain destination address information, e.g., destination IP addresses. If a request for content is destined to a destination that is on the whitelist, the steering component 210 directs the request to the optimization platform 212 for content delivery optimization. For example, the steering component may perform an IP address lookup by checking the destination IP address of the request against the whitelist. If a request for content is destined to a destination that is on the blacklist, the steering component does not direct the request to the optimization platform. Instead, the steering component directs the request to a bypass route. If a request for content is destined to a destination that is neither on the whitelist nor on the blacklist, the steering component directs the request to the discovery proxy 220. The discovery proxy implements the content discovery process in which the discovery proxy determines whether or not the returned content includes content of interest and adds information related to the request to either the whitelist or the blacklist. For example, at the start of a deployment of the traffic controller 208, the whitelist stored in the steering component contains a list of IP addresses of popular known video sites. In addition to the list of IP addresses of popular known video sites, the whitelist may include additional information such as IP address lifetime, destination port, source port, time-of-day. The steering component can check destination IP addresses of requests that are sent from the mobile device 102. If a request from the mobile device is destined to an IP address that is on the whitelist, the steering component directs the request to the optimization platform for video content delivery optimization. If a request from the mobile device is destined to an IP address that is not on the whitelist, the request is subjected to the content discovery process by steering the request to the discovery proxy. The discovery proxy implements the content discovery process in which the discovery proxy determines whether or not the returned content includes video content. If the discovery proxy determines that the returned content includes video content, the discovery proxy identifies the source of the video content. The discovery proxy then notifies the steering component with details about the video content source (e.g., the IP address), so that the steering criteria maintained in the steering component can be updated to include information about the newly discovered video content source. For example, the whitelist is updated to include the IP address of the newly discovered video content source. As a result, the next time there is a request for the newly discovered source, the request can be steered accordingly. In an embodiment, the whitelist is empty at the start of a deployment of the traffic controller. The empty whitelist is then populated by IP addresses that are learned by the discovery proxy. If the requested content does not include video content, the steering criteria maintained in the steering component can be updated to include the destination information of the request. For example, the destination IP address in the request is stored in a blacklist. In an embodiment, any future request for content that is destined to an IP address that is on the blacklist is sent to the Internet gateway 110 through the bypass route and is not directed to the optimization platform. The third category "other" may not be in the form of a list. Rather, the third category "other" can include all of the IP addresses that are neither on the whitelist nor on the blacklist. From the population of request addresses in the third category "other," new entries are discovered for addition to either the whitelist or the blacklist.

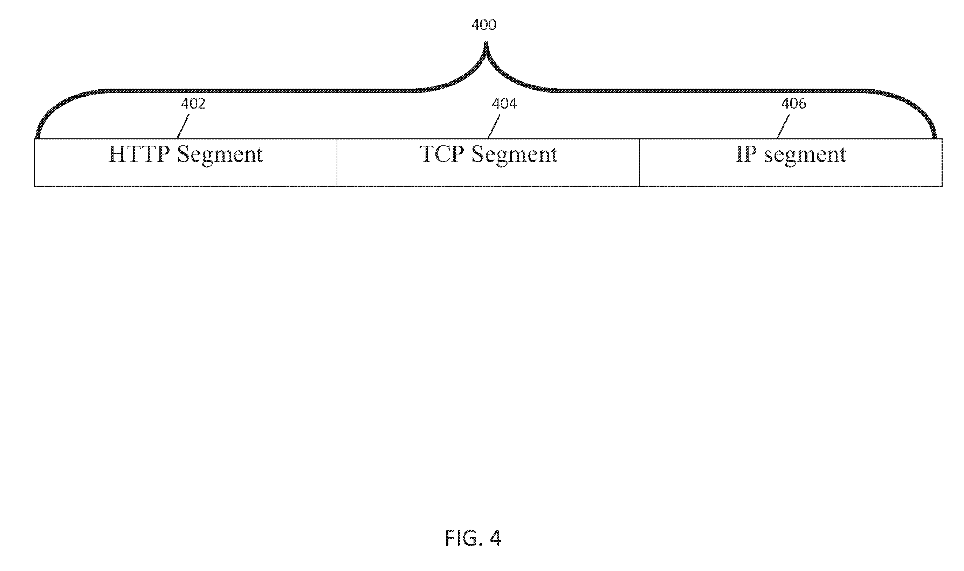

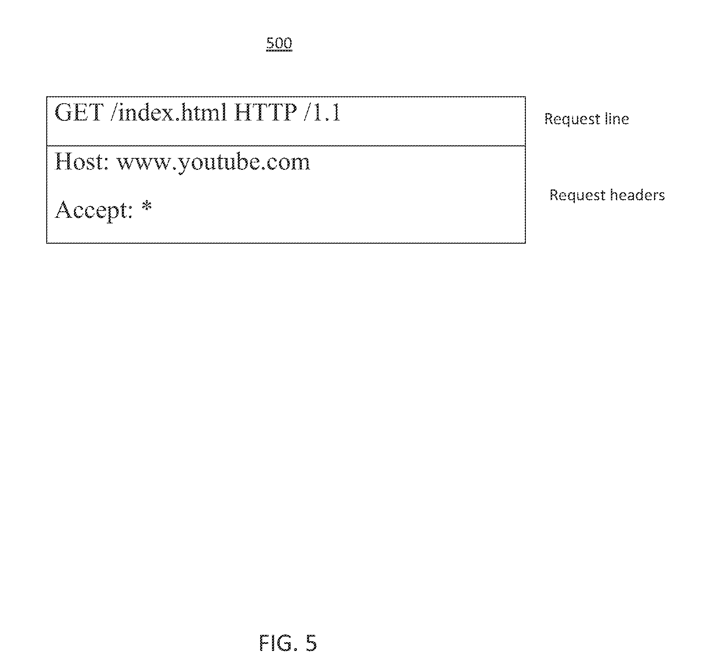

In an embodiment, the request for content that the steering component 210 receives is a single IP packet or multiple IP packets. Fig. 4 shows an exemplary request IP packet 400. As depicted in Fig. 4, the IP packet includes an HTTP segment 402, a Transmission Control Protocol (TCP) segment 404, and an IP segment 406. The HTTP segment includes an HTTP request message, such as an HTTP GET request message. Fig. 5 shows an exemplary HTTP GET request message 500. As depicted in Fig. 5, the HTTP GET request message includes a start line, which is also referred to as the request line, and request headers. The request headers contain a host such as www.youtube.com and acceptable response formats. The request line contains the "GET" operation, a request URL such as "index.html" that describes the resource of the host on which to perform the "GET" operation, and an HTTP version such as HTTP 1.1. In the exemplary HTTP GET request message, all response formats are acceptable. The TCP segment is also referred to as the TCP header. The TCP segment may include TCP information, such as source port, destination port, and TCP sequence number. The IP segment is also referred to as the IP header. The IP segment may include IP information such as source IP address, destination IP address, and time to live (TTL). Compared with a conventional traffic control approach that scans the URL or domain name in an HTTP GET request message, scanning the IP header for the destination IP address can be performed using only the network layer information. Therefore, the operation of getting into the HTTP GET request message to obtain the URL is no longer needed. As a result, dynamic traffic control can be performed in a manner that is very resource efficient.

The optimization platform 212 adds value to the content delivery system 100 with intelligent, device-aware and policy-aware delivery of video content and other content of interest, and reduces costs while increasing effective bandwidth. The optimization platform enables service providers to define subscriber level, time-of-day-based, or volume-based policies that influence the optimization decision. For example, with the optimization platform 212, service providers can identify video content in a response and optimize video content on demand, to reduce network cost while increasing utilization of existing network assets. The optimization platform can deliver the right amount of video data for smooth playback, but not too much at once, eliminate wasted bandwidth in case the user moves on to newer content before finishing watching the current video, increase network efficiency with a caching system, perform offline transcoding, and adjust the optimized media bit-rate delivered to the subscriber based on available network bandwidth. In the embodiment depicted in Fig. 2, the discovery proxy 220 and/or the optimization platform dynamically update(s) the whitelist and the blacklist of the steering component 210.

Each of the media optimizer proxies 214, 216, and 218 of the optimization platform 212 is configured to optimize video content for delivery to the mobile device 102 and/or to the radio access network 104 according to criteria such as characteristics of the mobile device, the radio access network, and/or the video content. In an embodiment, each media optimizer proxy includes a transcoding module that is configured to encode video content that is being delivered into encoded video content, whose data size is smaller than the data size of the video content that is being delivered. The transcoding module may encode the video content based on the physical dimensions and resolution of the mobile device display, perceived bandwidth of the communications channel between the content and the mobile device, and supported codecs and delivery protocols of the mobile device. The transcoding module may also be configured to encode the content that is being delivered into encoded content that is more secure. By encoding the content that is being delivered into a smaller or more secure encoded form, the content delivery is optimized.

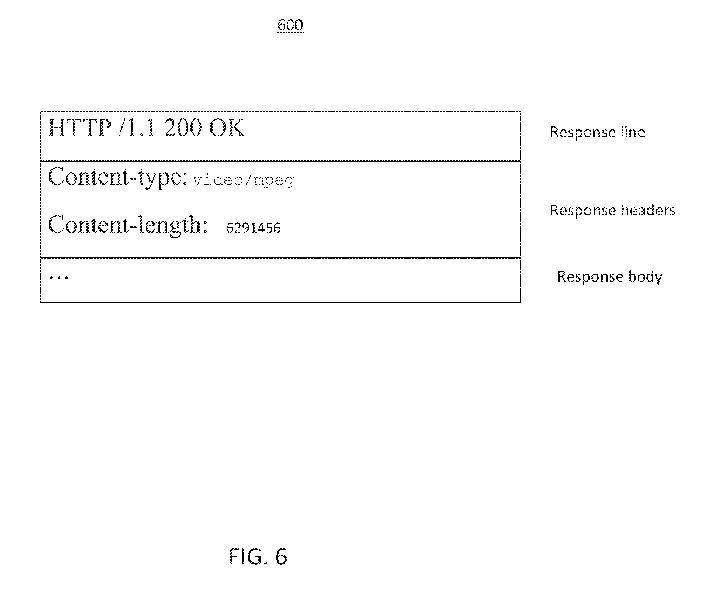

The response from the video server 114 and/or the non-video server 116, which may be a HTTP response, can be transmitted in a single IP packet or multiple IP packets. Each response IP packet may have a similar format to the exemplary request IP packet shown in Fig. 4. For example, the response IP packets may include an HTTP segment, a TCP segment, and an IP segment. The HTTP segment may include an HTTP response message. Fig. 6 shows an exemplary HTTP response message 600. As depicted in Fig. 6, the HTTP response message includes a start line, which is also referred to as the response line, response headers, and a response body. The response line contains an HTTP version such as HTTP 1.1, and a status code with reason phrase such as "200 OK." The response headers contain response content information such as content-type and content-length. The content-type identifies the Internet media (MIME) type of the response body, which may be video, audio, image, or other content type. For example, the content-type may be "text/html," which represents the response body is an HTML document. The content-type may be "text/plain," which represents the response body is a document in plain text. The content-type may be "image/gif," which represents that the response body is an image of type GIF. The content-type may be "audio/x-wav," which represents that the response body contains WAV sound data. As shown in Fig. 6, the content-type is "video/mpeg," which represents video in "Moving Picture Experts Group" (MPEG) format. The content-length identifies the length of the response body in bytes. In the HTTP response message of Fig. 6, the content-length is 6291456 bytes.

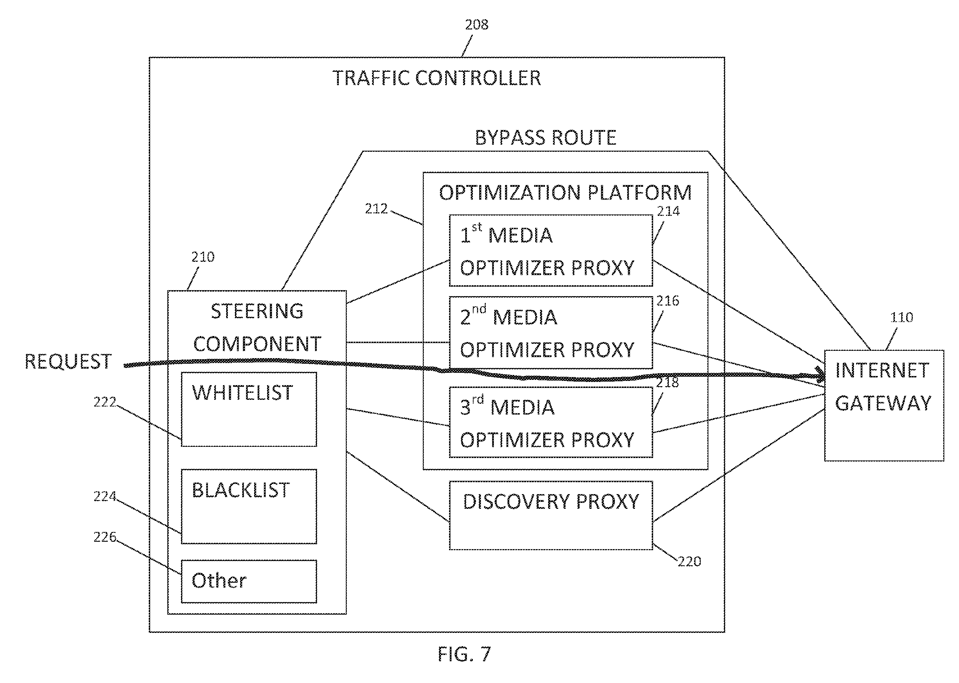

Figs. 7-11 illustrate examples of operations of the traffic controller 208 depicted in Fig. 2. In the example illustrated in Fig. 7, the steering component 210 receives a request for content from an interested party, such as the mobile device 102. The steering component checks the IP header of the request message for the destination IP of the request. If the request is destined to a video source whose IP address is on the whitelist 222, e.g., the destination IP address of the request matches one of the addresses on the whitelist, the steering component sends the request for content through the optimization platform 212 to the Internet gateway 110. The steering component may check other information in the request message with the information in the whitelist, such as IP address lifetime, destination port, source port, time-of-day. The Internet gateway 110 transmits the requests to the video content server 114 (shown in Fig. 1) through the Internet 112 (shown in Fig. 1).

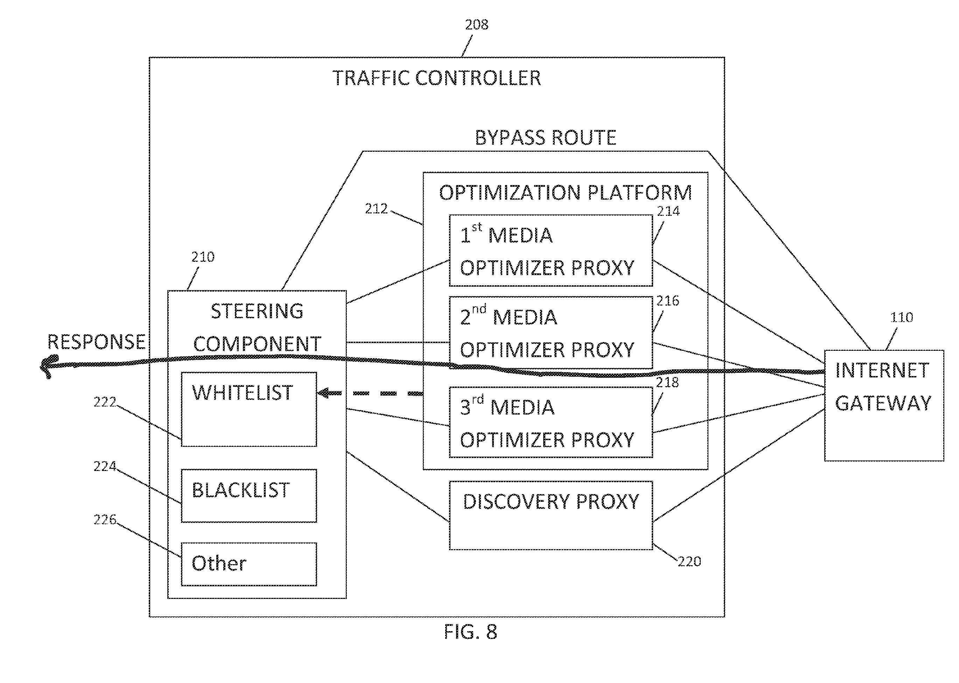

In the operation example illustrated in Fig. 8, the video content server 114 (shown in Fig. 1) sends a response that contains the requested video content through the Internet 112 (shown in Fig. 1) to the Internet gateway 110. The Internet gateway transmits the video content to the media optimizer proxies 214, 216, 218 of the optimization platform 212. The optimization platform sends the optimized video content to the mobile device 102. In an embodiment, at least one of the media optimizer proxies sends feedback information with respect to the whitelist 222 to the steering component and the steering component dynamically adjusts the whitelist. For example, the media optimizer proxies may feed performance indicators and other characteristics indicators to the steering component, which in turn adjusts the whitelist to adapt to system load or efficacy. In another embodiment, at least one of the media optimizer proxies reduces the scope of the whitelist, for example, reduces the number of the video sources on the whitelist. This may happen when one of the media optimizer proxies receives more video traffic than it can handle. In this case, although the volume of optimized video traffic may be reduced because some video sources have been removed from the whitelist, the optimization platform functions dynamically regardless of the video traffic mix. The media optimizer proxies may feed performance indicators and other characteristics indicators to a feedback agent (not shown), which in turn adjusts the whitelist and/or the blacklist to adapt to system load or efficacy. The feedback agent may be an independent component or may be embedded in the media optimizer proxies.

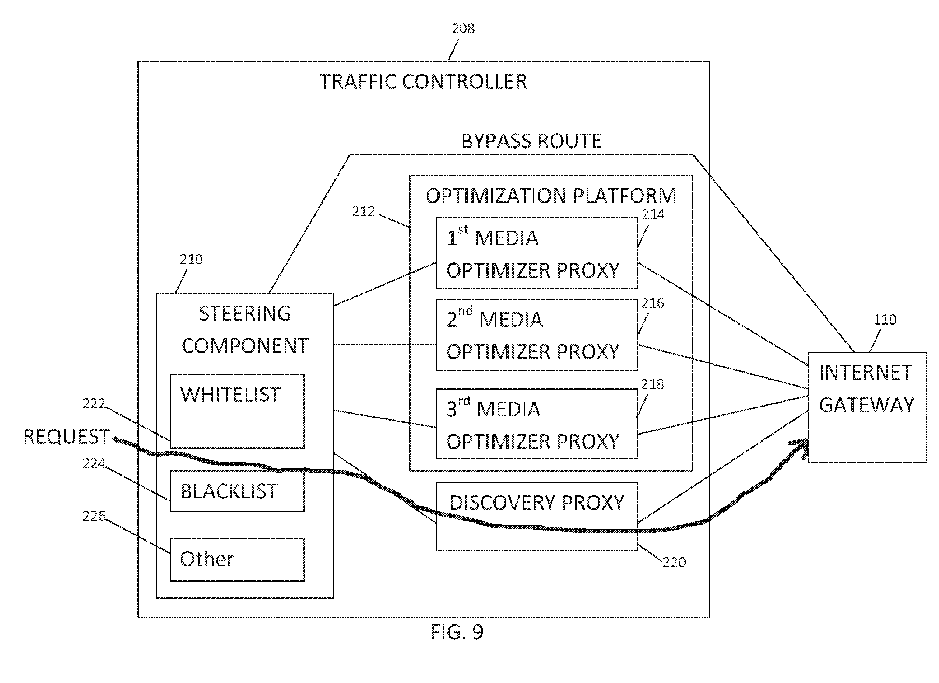

In the example illustrated in Fig. 9, the steering component 210 receives a request for content that is destined to an IP address that is not on the whitelist 222 (when there is no blacklist 224) or is destined to an IP address that is neither on the whitelist nor on an existing blacklist. In an embodiment, the request for content is destined to an IP address that is of the third category "other" 226. The steering component then checks the destination IP address of the request with addresses on the whitelist and the blacklist (if it exists), and sends the request to the discovery proxy 220. The discovery proxy transmits the request to the video content server 114 (shown in Fig. 1) or the non-video content server 116 (shown in Fig. 1) through the Internet gateway 110 and the Internet 112 (shown in Fig. 1) according to the destination IP address of the request.

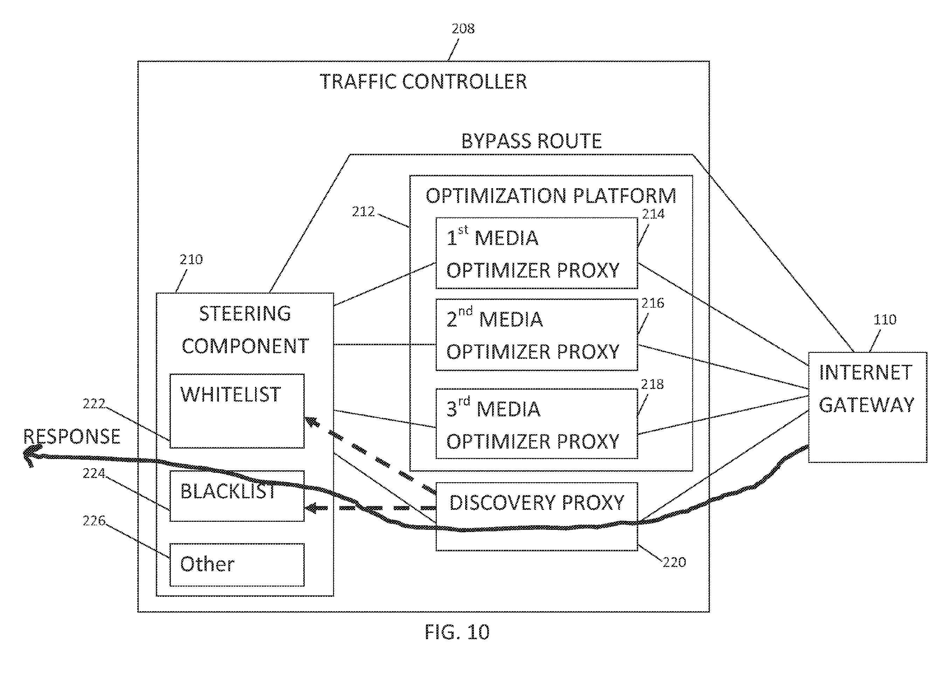

In the example illustrated in Fig. 10, the video content server 114 (shown in Fig. 1) or the non-video content server 116 (shown in Fig. 1) sends the requested content through the Internet 112 (shown in Fig. 1) to the Internet gateway 110. The Internet gateway transmits the requested content to the discovery proxy 220 in a response. The discovery proxy scans the response to determine whether or not the response contains video content. In an embodiment, the discovery proxy looks into the HTTP header of the response. For example, the discovery proxy looks at the content-type value in the HTTP header to determine whether or not the response contains video content. In another embodiment, the discovery proxy looks into the bytes of the response, such as the content-length value in the HTTP header, to determine whether or not the response contains video content. If the response is determined to include video content, then the discovery proxy updates the whitelist 222 to include the IP address of the destination IP address of the request (the IP address of the video content source). If the response does not include video content, then the discovery proxy creates a blacklist 224 or updates an existing blacklist to include the IP address of the destination IP address of the request. The response is also delivered to the mobile device 102.

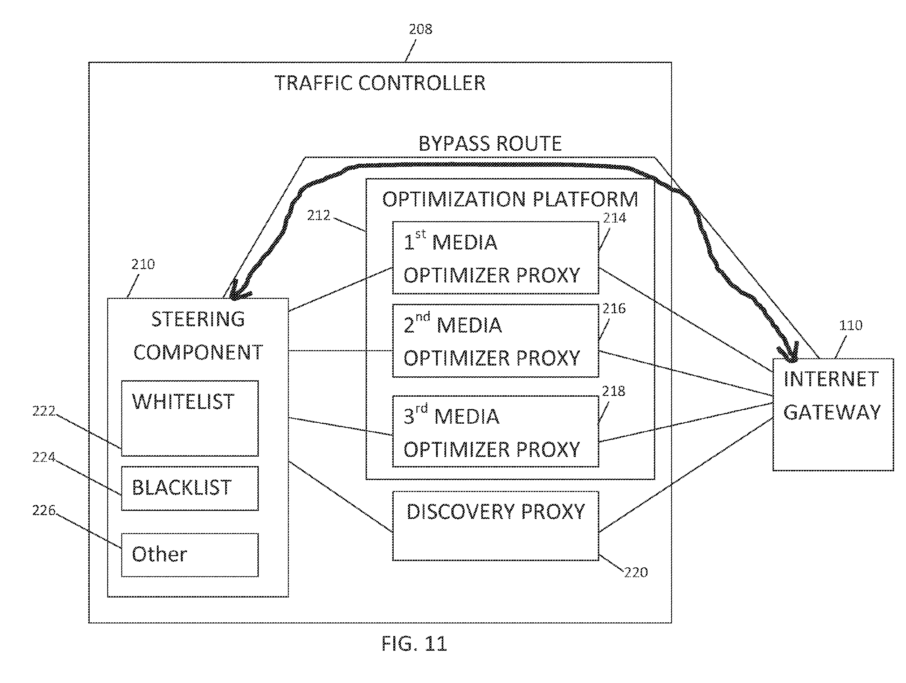

In the example illustrated in Fig. 11, the steering component 210 receives a request for content that is destined to an IP address that is on the blacklist 224, e.g., matches the destination IP address of the request with one of the addresses on the blacklist. The steering component sends the request to the Internet gateway 110 through the bypass route. The non-video content server 116 (shown in Fig. 1) sends the requested content in a response to the Internet gateway 110 through the Internet 112 (shown in Fig. 1). The Internet gateway 110 transmits the response to the steering component 210 through the bypass route for delivery to the mobile device 102. In this example, the request and the response are not optimized. As a result, only video content is optimized by the optimization platform 212.

Although the discovery proxy 220 is external to the steering component 210 in the embodiment depicted in Fig. 2, the discovery proxy may be integrated into the steering component in some embodiments. Fig. 12 depicts such an embodiment in which a traffic controller 1208 includes a steering component 1210 with an internal discovery proxy 220. Components of the traffic controller 1208 may not be included in the same device and/or in the same network. For example, the steering component and the optimization platform are included in separate network devices and/or separate networks. In another example, the first, second and third media optimizer proxies are included in separate network devices and/or separate networks.

In a static traffic steering approach, pre-configured rules are used to steer requests for delivery optimization. For example, URLs in the HTTP GET request can be used to steer requests through an optimization platform. With the fast changing Internet video content delivery landscape where hot websites and videos appear and disappear relatively quickly, pre-configured rules can become out-of-date in a short duration of time. Compared with the static traffic steering approach, the traffic controller 108 of Fig. 1, the traffic controller 208 of Fig. 2, and the traffic controller 1208 of Fig. 12 dynamically steer traffic by continuously updating the steering criteria in response to IP-based learning from actual traffic seen by the traffic controller.

In addition, compared with a traffic steering approach in which only the whitelist 222 is implemented and updated, the traffic controller 108 of Fig. 1, the traffic controller 208 of Fig. 2, and the traffic controller 1208 of Fig. 12 dynamically steer traffic by continuously updating both the whitelist and the blacklist 224. Implementing and updating only the whitelist leaves a significant portion of traffic unchecked, which leads to only a fraction of the video content being optimized, causing the value of the optimization platform 212 to be significantly diminished. However, with the traffic controller 108 of Fig. 1, the traffic controller 208 of Fig. 2, and the traffic controller 1208 of Fig. 12, more of the video content can be optimized, thereby increasing the value of the optimization platform 212 and improving the efficiency of network operators.

Although the traffic controllers 108, 208, 1208 are described above with respect to video content, the traffic controllers can also be used for the delivery optimization of other type or types of content. For example, the discovery proxy 220 can be used to detect content such as text, webpage, image, or any combination of video and non-video content by, for example, looking at the HTTP header in the HTTP response. The steering component 210, 1210 may maintain a whitelist, a blacklist and/or a third category "other" that steering criteria related to any combination of video and non-video content. The optimization platform 212 may optimize the delivery of any combination of video and non-video content.

Referring back to Fig. 1, the Internet gateway 108 of the content delivery system 100 provides a gateway for communications between the mobile device 102 and Internet-connected hosts and/or servers in the Internet 112, which can also be referred to as the "cloud." The Internet gateway may include a Serving General Packet Radio Service (GPRS) Support Node (SGSN) and a Gateway GPRS Support Node (GGSN). For example, the Internet gateway can be a Wireless Application Protocol (WAP) gateway that converts the WAP protocol used by the radio access network to the HTTP protocol used by the Internet 112. In an embodiment, the Internet gateway enables mobile stations to access multimedia content, such as Hyper Text Markup Language (HTML), compact HTML (cHTML), and extensible HTML (xHTML), which is stored on Internet-connected hosts and/or servers. In the embodiment depicted in Fig. 1, the radio access network 104, the data gateway 106, the traffic controller 108, and the Internet gateway are located in an access network 111, which provides access to the Internet. The access network may be administered by a single entity or different entities. For example, the access network may be managed by a single Internet service provider (ISP).

The video content server 114 of the content delivery system 100 is configured to store video content, to process requests for video content from the mobile device 102, and to provide requested video content to the mobile device over at least one delivery protocol. The video content server may serve video content over a single video transport protocol or more than one video transport protocol. In an embodiment, the video content server serves video content over HTTP such as HTTP-Progressive Download (HTTP-PD) or HTTP-Adaptive Streaming (HTTP-AS), Real Time Messaging Protocol (RTMP), and/or real time streaming protocol (RTSP) or other similar protocols such as Real-time Transport Protocol (RTP) and Real Data Transport (RDT) from a content encoder or from pre-encoded content stored in a video content database (not shown). The video server may belong to a video web site, such as YouTube.com, Google Videos, Metacafe.com, and Hulu.com.

The non-video content server 116 of the content delivery system 100 is configured to store non-video content, to process requests for non-video content from the mobile device 102, to provide requested non-video content to the mobile device. The non-video content can be text, webpage, image, or any combination thereof. The non-video server may include a database (not shown) for storing non-video content. In an embodiment, the non-video content server is an HTTP server.

The video content server 114 may be physically connected to the non-video content server 116. For example, the video content server may be directly connected to the non-video content server or indirectly connected to the non-video content server through an intermediate network. The video content server may be the same as the non-video content server. For example, the video content server and the non-video content server may be located in the same physical server. In an embodiment, video content server and non-video content are distinguished by Layer 3 and Layer 4 information, e.g., IP address and port number. For example, video content is located at IP address A, port B while non-video content is located at IP address A, port C, where A represents an IP address and B and C represent different ports numbers. In another example, video content is located at IP address A, port B while non-video content is located at IP address D, port C, where A and D represent different IP addresses.

Although the operations herein are shown and described in a particular order, the order of the operations may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations may be implemented using software instructions stored on a computer useable storage medium for execution by a computer. As an example, an embodiment of a computer program product includes a computer useable storage medium to store a computer readable program that, when executed on a computer, causes the computer to perform operations, as described herein.

Furthermore, embodiments of at least portions of the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The computer-useable or computer-readable medium can be an electronic, magnetic, optical, electromagnetic, infrared, or semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

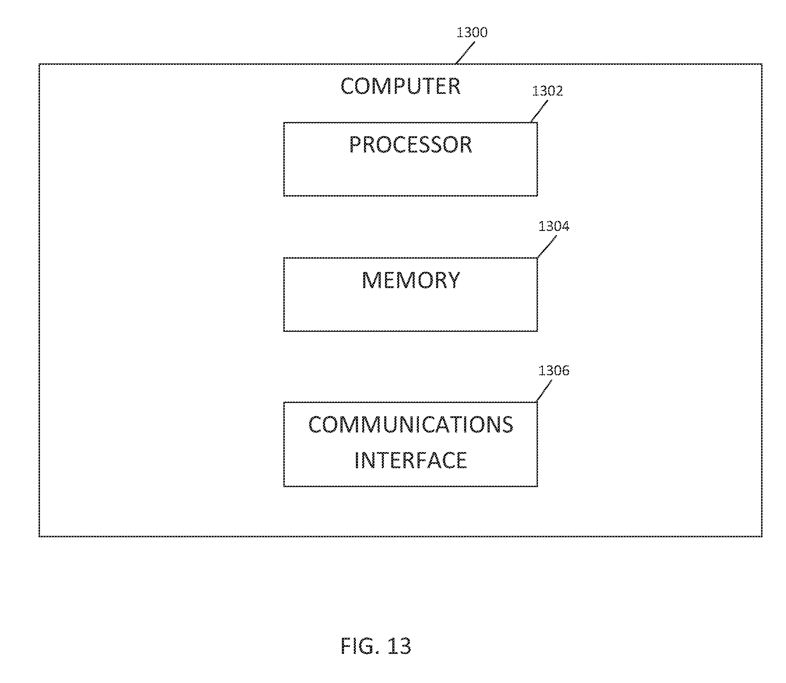

In an embodiment, at least one of the functionalities of the traffic controller 108 of Fig. 1, the traffic controller 208 of Fig. 2, and the traffic controller 1208 of Fig. 12 is performed by a computer that executes computer readable instructions. Fig. 13 depicts a computer 1300 that includes a processor 1302, memory 1304, and a communications interface 1306. The processor may include a multifunction processor and/or an application-specific processor. Examples of processors include the PowerPC™ family of processors by IBM and the x86 family of processors by Intel. The memory within the computer may include, for example, storage medium such as read only memory (ROM), flash memory, RAM, and a large capacity permanent storage device such as a hard disk drive. The communications interface enables communications with other computers via, for example, the Internet Protocol (IP). The computer executes computer readable instructions stored in the storage medium to implement various tasks as described above.

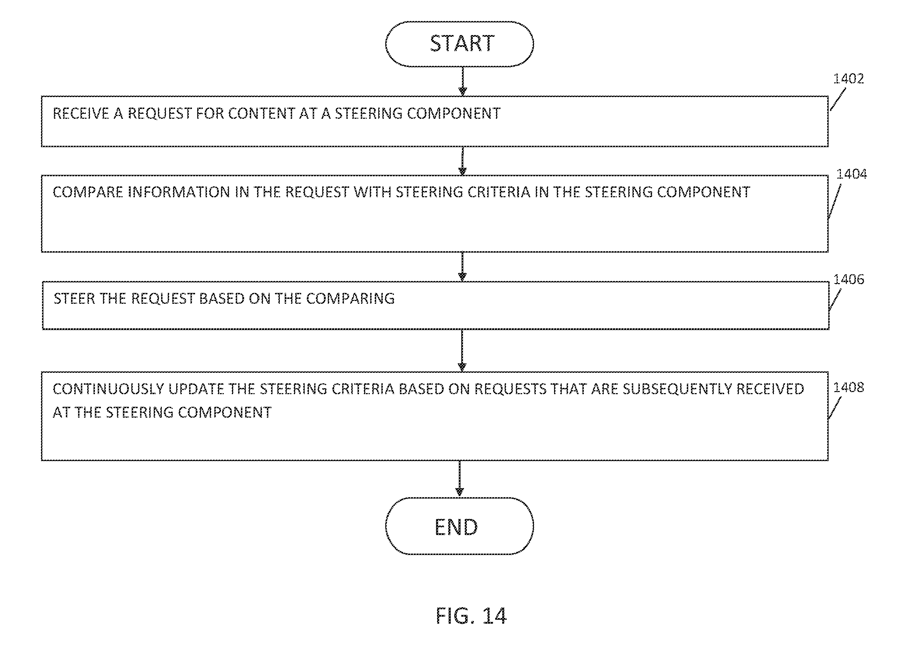

Fig. 14 is a process flow diagram of a method for dynamic traffic steering in accordance with an embodiment of the invention. At block 1402, a request for content is received at a steering component. At block 1404, information in the request is compared with steering criteria in the steering component. At block 1406, the request is steered based on the comparing. At block 1408, the steering criteria are continuously updated based on requests that are subsequently received at the steering component.

In addition to the embodiments described above, other techniques for traffic steering are described below. In some embodiments, the content delivery system 100 includes a DNS proxy, which is used to make traffic steering decision based at least in part of domain information. For example, the domain name in a DNS request is used to update traffic steering criteria.

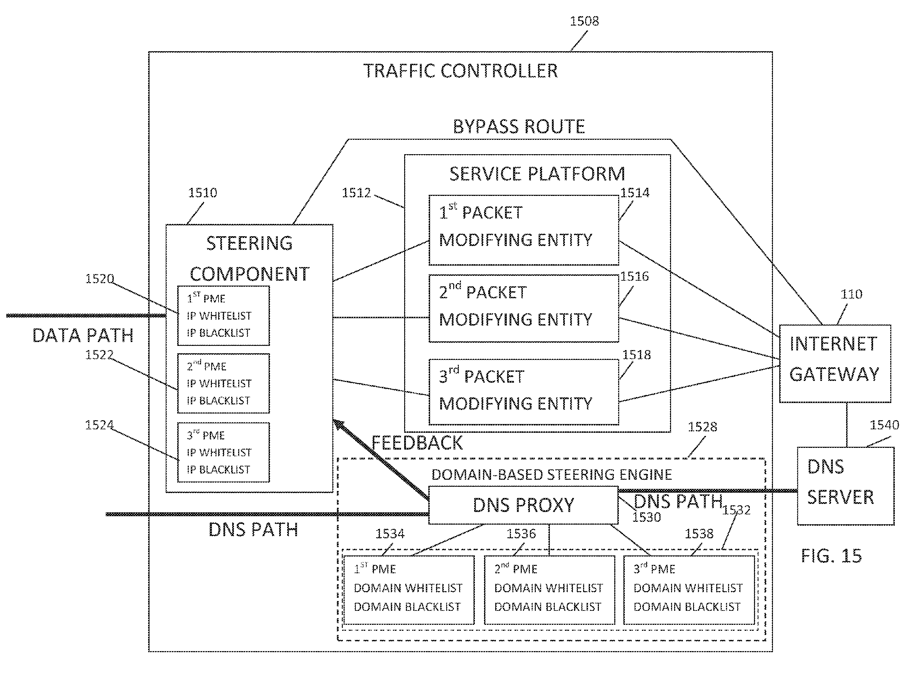

Fig. 15 depicts an embodiment of the traffic controller 108 of Fig. 1 that includes a DNS proxy 1530. In the embodiment depicted in Fig. 15, a traffic controller 1508 includes a steering component 1510, a service platform 1512 that includes a first packet modifying entity (PME) 1514, a second packet modifying entity 1516, and a third packet modifying entity 1518, and a domain-based steering engine 1528. The traffic controller 1508 is a logical representation, in which components of the traffic controller 1508 may be located in a single device or distributed across multiple devices. In an embodiment, the steering component 1510, the service platform, and the DNS proxy are located in separate network devices and/or separate networks.

The management and/or the administration of the traffic controller 1508 is flexible. The traffic controller 1508 may be managed and/or administered by a single entity or different entities. An entity may include the operator of a wireless service provider network (e.g. that offers 3G, 4G and/or WiFi access), an ISP (e.g., that offers dial-up, DSL, and/or cable modem access), or a private enterprise network. For example, the traffic controller 1508 may be managed and/or administered by a single ISP, a single wireless service provider, or a private enterprise. Managing and/or administering the traffic controller 1508 using a single ISP, a single wireless service provider, or a private enterprise allows the ISP, the single wireless service provider, or the private enterprise to have complete control over traffic steering.

Although the traffic controller 1508 is depicted and described with certain components and functionality, other embodiments of the traffic controller 1508 may include fewer or more components to implement less or more functionality. In an embodiment, the service platform 1512 may include less than three packet modifying entities or more than three packet modifying entities. In another embodiment, the traffic controller 1508 may include one or more discovery proxies 220 (shown in Figs. 2 and 7-11). In another embodiment, the traffic controller 1508 may include multiple steering components 1510, multiple service platforms, and/or multiple domain-based steering engines 1528. Each steering component/service platform/domain-based steering engine may be configured to independently handle a part of or a certain type of work load or to work cooperatively to handle the entire work load.

Although the traffic controller 1508 is shown in Fig. 15 as being located in a data path and a DNS path before the Internet gateway 110, in other embodiments, the traffic controller 1508 may be located anywhere in the content delivery system 100 of Fig. 1. For example, the components of the traffic controller 1508 maybe integrated into the Internet gateway, located between the Internet gateway and the Internet 112, located within the Internet 112, located between the Internet and the video content server 114, located between the Internet and the non-video content server 116, integrated into the video content server, and/or integrated into the non-video content server.

The service platform 1512 is a logical representation in which components of the service platform may be located in a single device or distributed across multiple devices. In an embodiment, the packet modifying entities 1514, 1516, 1518 are located in separate network devices and/or separate networks. In another embodiment, at least two of the packet modifying entities are located in the same network device and/or the same network. Each of the packet modifying entities can modify one or more packets carrying a request for content and/or one or more packets carrying a response to the request, which may be sent from the video content server 114 and/or from the non-video content server 116. For example, the packet modifying entity may insert data into a packet, translate data carried in a packet, and/or delete data in a packet. The packet modifying entity can be located anywhere in the data path between a client device such as the mobile device 102 and the video content server and/or in the data path between the client device and the non-video content server. The packet modifying entities may be managed and/or administered by a single entity or different entities. An entity may include the operator of a wireless service provider network, an ISP, or a private enterprise network. For example, the packet modifying entities may be managed and/or administered by a single ISP, a single wireless service provider, or a private enterprise. Managing and/or administering the packet modifying entities using a single ISP, a single wireless service provider, or a private enterprise allows the entity to have complete control over the packet modifying operation. In an embodiment, at least one of the packet modifying entities is operated by a third-party entity.

The domain-based steering engine 1528 includes a DNS proxy 1530 and domain-based steering rules (DBSR) module 1532. The DNS proxy ensures that the traffic steering decision is made at least in part based on domain information. For example, the domain name in a DNS request is used to update traffic steering criteria. In an embodiment, a domain whitelist and a domain blacklist are maintained for each packet modifying entity. In addition to the domain whitelist and the domain blacklist, an IP address whitelist and an IP address blacklist are also maintained for each packet modifying entity. The IP address whitelist is also referred to as the IP whitelist while the IP address blacklist is also referred to as the IP blacklist. In an embodiment, the DNS proxy has access to the domain whitelist, the domain blacklist, the IP whitelist, and the IP blacklist of each packet modifying entity. In the embodiment depicted in Fig. 15, the DBSR module contains the domain whitelist and the domain blacklist 1534 of the first packet modifying entity (PME), the domain whitelist and the domain blacklist 1536 of the second packet modifying entity, and the domain whitelist and the domain blacklist 1538 of the third packet modifying entity. In addition, the steering component 1510 contains the IP whitelist and the IP blacklist 1520 of the first packet modifying entity, the IP whitelist and the IP blacklist 1522 of the second packet modifying entity, and the IP whitelist and the IP blacklist 1524 of the third packet modifying entity.

Traditional approaches to traffic steering are static and typically rely on a combination of preconfigured destination IP addresses and TCP port numbers that are fixed. Taking the HTTP protocol as an example, the same combination of destination IP address and TCP port is used to transport different services such as webmail, video, downloads and P2P traffic. This is a coarse grained approach in which the packet modifying entities may receive data flows that cannot be handled by the packet modifying entities. In addition, traditional approaches that are selective (e.g. URL matching) typically do not include a feedback loop that ensures that the traffic steering criteria are managed dynamically and automatically.

In contrast to traditional approaches, the domain whitelists, the domain blacklists, the IP whitelists, and the IP blacklists are dynamically updated. The domain whitelists, the domain blacklists, the IP whitelists, and the IP blacklists may be periodically or randomly updated, for example, by the DNS proxy 1530 and/or the steering component 1510. The domain whitelist and blacklist may change relatively slowly (e.g. days) whereas the IP address whitelist and blacklist may change relatively quickly (e.g. seconds).

The DNS proxy 1530 is situated in the DNS path of a client device such as the mobile device 102, or multiple client devices such as mobile devices. In an embodiment, the DNS path is between the client device and the video content server 114 and/or the non-video content server 116. The DNS proxy monitors the DNS traffic from the client device/devices and the DNS traffic to the client device/devices. In the embodiment depicted in Fig. 15, the DNS proxy monitors the DNS traffic between the client device/devices and at least one DNS server 1540 that resolves domain names to IP addresses. In an embodiment, a client device issues a DNS lookup request to resolve a domain name to an IP address and the DNS lookup request is intercepted by the DNS proxy. In this embodiment, the DNS proxy may intercept the DNS response from the DNS server to the client device and obtain the resolved IP address or IP addresses of the domain name from the DNS response. In an embodiment, at least one of the interception of the DNS lookup request and the interception of the DNS response is transparent to the client device and/or the DNS server. For example, a DNS lookup request is intercepted by the DNS proxy regardless of the client device from which the DNS lookup request is received. In another example, the DNS response is intercepted by the DNS proxy regardless of the client device to which the DNS response is transmitted.

Although the DNS server 1540 is shown in Fig. 15 as being located between the DNS proxy 1530 and the Internet gateway 110, in other embodiments, the DNS server may be located anywhere between the DNS proxy and the video content server 114 and the non-video content server 116. In an embodiment, the DNS server is integrated into the Internet gateway 110. In another embodiment, the DNS server is located between the Internet gateway and the Internet 112. Although the DNS server is shown in Fig. 15 as being separate from the DNS proxy, in other embodiments, the DNS server may be integrated into the DNS proxy. In each of these embodiments, the DNS proxy translates domain names to IP addresses.

In an embodiment, the DNS proxy 1530 compares the domain name with the domain whitelist and blacklist of each packet modifying entity. Based on the comparison, the DNS proxy may provide feedback to the steering component 1510 to update the IP whitelist and the IP blacklist of a corresponding packet modifying entity. In an embodiment, if a match is made between the domain name and the domain whitelist or the domain blacklist of a packet modifying entity, the resolved IP address or IP addresses of the domain name is/are added into the corresponding IP whitelist or IP blacklist of that packet modifying entity. Specifically, the DNS proxy may intercept a DNS response from the DNS server 1540, obtain the resolved IP address or IP addresses of the domain name from the DNS response, and send feedback to update a corresponding IP whitelist or IP blacklist to include the resolved IP address or IP addresses of the domain name. An IP address added to an IP whitelist or an IP blacklist may be assigned a valid period. Before the valid period of an IP address expires, the IP address is used for traffic steering. After the valid period of an IP address expires, the IP address is not used for traffic steering and the IP address may be removed from the corresponding IP whitelist or the corresponding IP blacklist. In an embodiment, the valid period of an IP address in an IP whitelist or an IP blacklist is the duration of the DNS time to live (ttl) period.

The steering component 1510 is similar to or the same as the steering component 210 (shown in Figs. 2 and 7-11). The steering component 1510 intercepts data flows from a client device such as the mobile device 102 or client devices such as mobile devices to a destination device or destination devices. A destination device may be the Internet gateway 110, the video content server 114, or the non-video content server 116 or a destination that is located in the Internet 112. The interception of the data flows from the client device/devices may be transparent to the client device/devices and/or the destination device/devices. For example, the data flows may be intercepted by the steering component 1510 regardless of the source and destination IP addresses of the packets. In an embodiment, the steering component 1510 includes a network address translation (NAT) component or a firewall component that is configured to rewrite the source IP address used by a client device to a public IP address owned by a service provider that manages or operates the steering component 1510.

In an embodiment, the steering component 1510 receives a data flow from a client device and compares an IP address associated with the data flow, such as the destination IP address of the data flow, with the IP whitelist and the IP blacklist of each packet modifying entity 1514, 1516, or 1518. The traffic can be steered based on the comparison. In an embodiment, a decision is made to route the data flow to a packet modifying entity or not to route the data flow to a packet modifying entity if a match is made between the destination IP address and the IP whitelist or the IP blacklist of the packet modifying entity. For example, if a match is found between the destination IP address and the IP whitelist of the first packet modifying entity 1514, the data flow is routed to the first packet modifying entity and, if a match is made between the destination IP address and the IP blacklist of the second packet modifying entity 1516, the data flow is not routed to the second packet modifying entity. Traffic that is not targeted for any packet modifying entity will not match either any IP whitelist or IP blacklist and is routed to the Internet via a bypass route. In addition to comparing a destination IP address of a data flow from a client device with the IP whitelist and the IP blacklist of each packet modifying entity, additional information of the data flow may be relied on to make a steering decision for the data flow. The additional information of the data flow may include, for example, TCP information associated with the data flow, such as the destination TCP port of the data flow. In an embodiment, if a match is made between the destination IP address and the IP blacklist of a packet modifying entity and if a match is also made between the destination TCP port of the data flow and a predetermined TCP port, the data flow is routed to the packet modifying entity. The decision to route data flows from a client device to a particular packet modifying entity can be done using a variety of techniques, including Virtual Local Area Network (VLAN) tagging, Differentiated Services Code Point (DSCP) marking, next hop gateway, interface selection, destination NAT or other techniques. In an embodiment, the decision to route data flows from a client device to a particular packet modifying entity is made on receipt of the first packet from the client device. The decision to route the data flow to the packet modifying entity can be made by the traffic controller 1508, the Internet gateway 110, a device in the Internet 112, the video content server 114, and/or the non-video content server 116. In an embodiment, the decision to route the data flow to a particular packet modifying entity is made, solely or partially, by the steering component 1510.

In an embodiment, steering a particular data flow is conducted on a per-TCP connection basis. For example, an IP address associated with a data flow, such as the destination IP address of the data flow, may be compared with at least one IP whitelist and/or IP blacklist of one or more packet modifying entities within a TCP connection. In this way, the IP steering criteria can be updated without disrupting established TCP sessions.

Comparing a domain name in a DNS request with domain whitelists and domain blacklists and adding the resolved IP address or IP addresses of the domain name into a corresponding IP whitelist or IP blacklist allows traffic steering decisions to be made on a domain-specific basis. Because traffic steering decisions are made on a domain-specific basis, the packet modifying entities can be configured to process traffic that is expected from the corresponding domains. For example, traffic related to a domain name that provides video content can be steered to a packet modifying entity that is configured to optimize video traffic and traffic related to a domain name that offers tourist information can be steered to a packet modifying entity that is configured to implement language translation services. In addition, the traffic steering decision is also based on IP address matching, which can be done at Layer 3 (Network Layer) of the OSI model. Because the traffic steering decision can be done at the Network Layer, the traffic steering is highly scalable and can be implemented using many different techniques, e.g., in a software solution such as Linux, or in a hardware solution such as an IP router. Furthermore, making the traffic steering decision on a domain basis and on IP address basis does not require termination of the TCP connections from a client device for flows that do not match the traffic steering criteria. Alternative traffic steering techniques such as URL/domain matching at Layer 7 (Application Layer) of the OSI model require the TCP connection from a client device to be terminated by the traffic controller 1508 for all data flows in order to make the steering decision, which may be unacceptable for certain customer deployments. For example, in some customer deployments, TCP termination caused by URL/domain matching can interfere with existing services such as existing web optimizations.

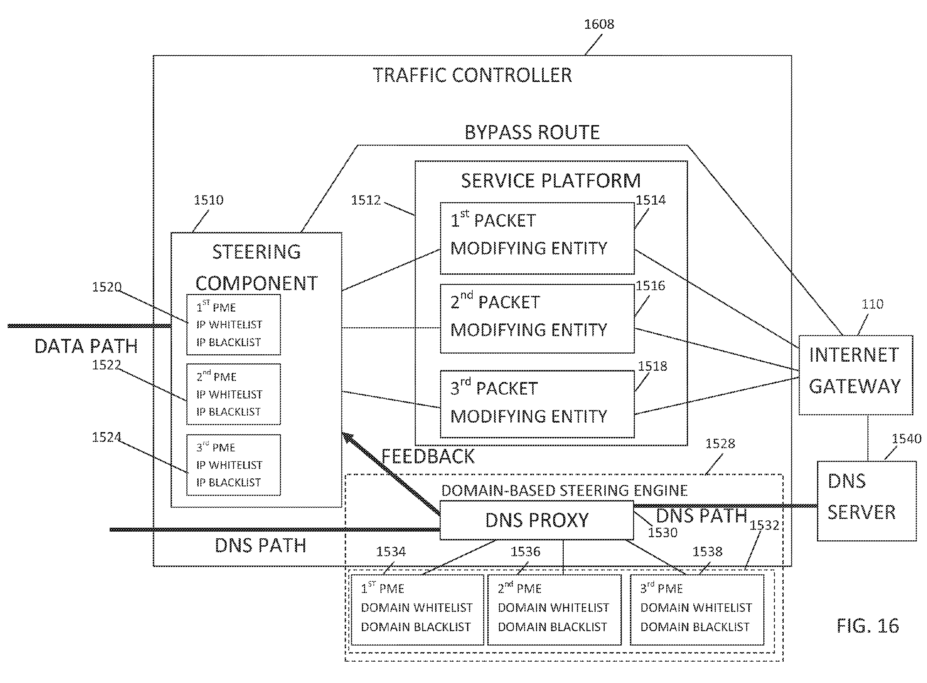

The domain whitelist and the domain blacklist of each of the packet modifying entities 1514, 1516, 1518 maybe contained in any applicable component of the content delivery system 100. Fig. 16 depicts another embodiment of the traffic controller 108 of Fig. 1 that includes a DNS proxy 1530. The difference between the traffic controller 1608 from Fig. 16 and the traffic controller 1508 from Fig. 15 is that the domain-based steering rules (DBSR) module 1532 is not contained in the traffic controller 1608.

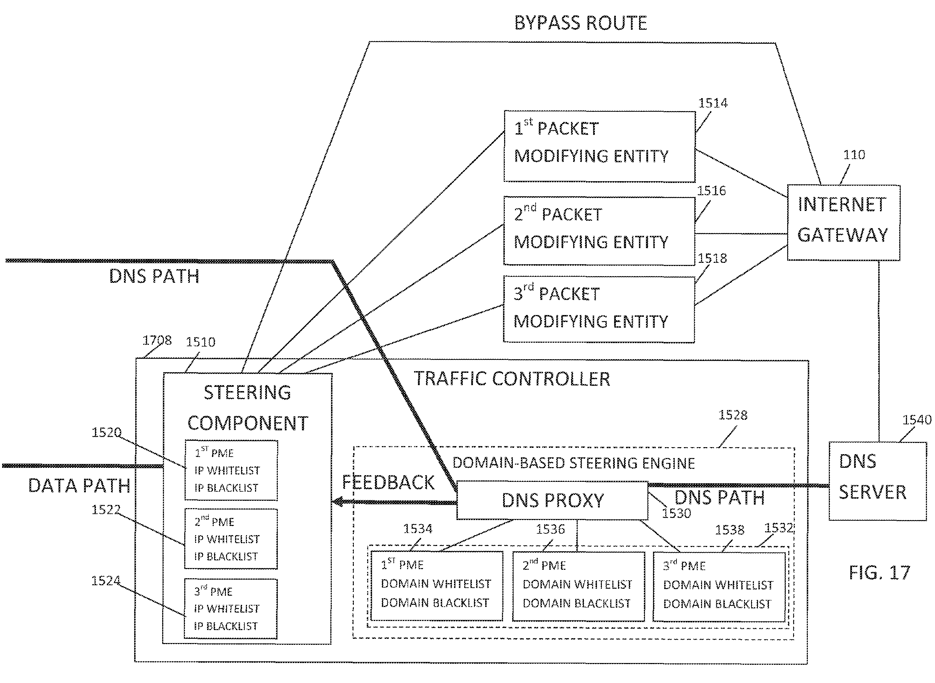

Each of the packet modifying entities 1514, 1516, 1518 may be located anywhere within the content delivery system 100 and/or outside of the content delivery system. For example, a packet modifying entity may be distributed within a component of the content delivery system and outside the content delivery system. In another example, each of the packet modifying entities may be a part of the traffic controller 1508 or separated from the traffic controller 1508. Fig. 17 depicts another embodiment of the traffic controller 108 of Fig. 1 that includes a DNS proxy 1530. The difference between the traffic controller 1708 of Fig. 17 and the traffic controller 1508 of Fig. 15 is that the packet modifying entities 1514, 1516, 1518 are separate from the traffic controller 1708 while the packet modifying entities 1514, 1516, 1518 are a part of the traffic controller 1508. For example, the packet modifying entities and the traffic controller 1708 may be located in separate network devices and/or separate networks.

In an embodiment, at least one of the packet modifying entities 1514, 1516, 1518 is a value added service (VAS) proxy that is configured to perform a VAS. A value added service can be any type of service. Some examples of value added services may include, without limitation, web optimization, media optimization such as video optimization/transcoding, content adaptation such as content translation, content filtering, caching, subscription service, advertising such as mobile advertising, antivirus, etc. The VAS or value added services (VASs) may be managed and/or administered by a single entity or different entities. An entity may include the operator of a wireless service provider network, an ISP, or a private enterprise network. For example, VASs may be managed and/or administered by a single ISP, a single wireless service provider, or a private enterprise. Managing and/or administering the VASs using a single ISP, a single wireless service provider, or a private enterprise allows the ISP, the single wireless service provider, or the private enterprise to have complete control over the delivery of value added services. Because traffic steering decisions are made on a domain-specific basis, the VASs can be configured to process the type of content that is expected from content sources associated with certain domain names. In an embodiment, at least one of the VASs is operated by a third-party entity.

In an embodiment, a web optimization VAS proxy is configured to manipulate web content to optimize the web content for delivery to a client device such as the mobile device 102 and/or for delivery to the radio access network 104 according to web optimization criteria. Some examples of the web optimization criteria may include, without limitation, a parameter setting of the access network in which the web optimization VAS proxy and/or the client device is located, a characteristic or characteristics of the client that operates or uses the client device, the client device, the radio access network, and/or the web content, and/or a preference of the client. The web optimization VAS proxy may cache web content, such as popular or frequently accessed web content, to save time and resource on backhaul as to provide a higher QOS to the client.

In an embodiment, a media optimization VAS proxy is configured to optimize media content, such as video content, for delivery to a client device such as the mobile device 102 and/or for delivery to the radio access network 104 according to media optimization criteria. Some examples of the media optimization criteria may include, without limitation, a parameter setting of the access network in which the media optimization VAS proxy and/or the client device is located, a characteristic or characteristics of the client that operates or uses the client device, the client device, the radio access network, and/or the content, and/or a preference of the client. In an embodiment, the media optimization VAS proxy includes a transcoding module that is configured to encode media content, such as video content, that is being delivered into encoded media content, whose data size is smaller than the data size of the media content that is being delivered. The transcoding module may encode the media content based on a characteristic or characteristics of the mobile device, such as the physical dimensions and resolution of the mobile device display, perceived bandwidth of the communications channel between the content source and the mobile device, and/or supported codecs and delivery protocols of the mobile device. The transcoding module may also be configured to encode the content that is being delivered into encoded content that is more secure. By encoding the content that is being delivered into a smaller or more secure encoded form, the content delivery is optimized.

In an embodiment, a content adaptation VAS proxy is configured to adapt content according to content adaptation criteria. Some examples of the content adaptation criteria may include, without limitation, a parameter setting of the access network in which the content adaptation VAS proxy and/or a client device such as the mobile device 102 is located, a characteristic or characteristics of the client that operates or uses the client device, the client device, the radio access network, and/or the content, and/or a preference of the client. The content adaptation VAS proxy may perform content translation such as language translation of content. For example, the content adaptation VAS proxy may translate content that is received in a language, such as English, into another language, such as Chinese or Spanish.

In an embodiment, a content filtering VAS proxy is configured to filter content according to content filtering criteria. Some examples of the content filtering criteria may include, without limitation, a parameter setting of the access network in which the content filtering VAS proxy and/or a client device such as the mobile device 102 is located, a characteristic or characteristics of the client that operates or uses the client device, the client device, the radio access network, and/or the content, and/or a preference of the client. For example, the content filtering VAS proxy may perform a parental control function to filter out inappropriate content for minors. In another example, the content filtering VAS proxy may filter out unwanted content, such as advertisements, from received content.

In an embodiment, a caching VAS proxy is configured to cache content, such as popular or frequently requested content, to save time and resources in responding to frequently requested content.

In an embodiment, a subscription service VAS proxy is configured to provide a subscription service for a client device such as the mobile device 102. For example, the subscription service VAS proxy may provide access passports to subscribers, which, for example, count content usage for subscribers, and/or set up prepaid accounts for subscribers.

In an embodiment, an advertising VAS proxy is configured to provide an advertisement or advertisements for a client device such as the mobile device 102. The advertisement or advertisements may be provided according to a setting of the access network in which the advertising VAS proxy and/or the client device are/is located, a characteristic or characteristics of the client that operates or uses the client device, the client device, the mobile device, the radio access network, and/or the content, and/or a preference of the client.

In an embodiment, an antivirus VAS proxy is configured to provide antivirus service for a client device such as the mobile device 102 and/or for the radio access network 104. The antivirus VAS proxy can help to make sure that the delivered content is virus-free. For example, the antivirus VAS proxy may check the received content for viruses and quarantine content that contains a virus.

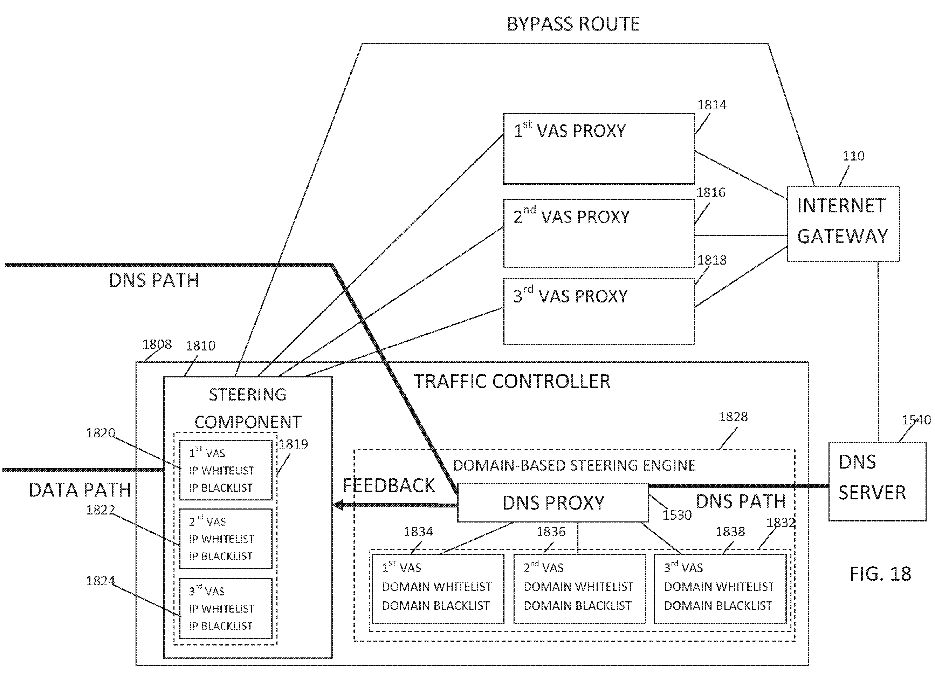

Fig. 18 depicts another embodiment of the traffic controller 108 of Fig. 1 that includes a DNS proxy 1530. In Fig. 18, the packet modifying entities 1514, 1516, 1518 of Fig. 17 are replaced by first, second, and third VAS proxies 1814, 1816, 1818 and that the DBSR module 1832 and the IP whitelists/blacklists are organized along service lines, e.g., per-VAS. In particular, a difference between the traffic controller 1808 of Fig. 18 and the traffic controller 1708 of Fig. 17 is that the DBSR module 1832 contains the domain whitelists and the domain blacklists 1834, 1836, 1838 of the first, second, and third value added services. Another difference between the traffic controller 1808 of Fig. 18 and the traffic controller 1708 of Fig. 17 is that steering component 1810 includes an IP-Based Steering Rules (IBSR) module 1819, which contains the IP whitelists and the IP blacklists 1820, 1822, 1824 of the first, second, and third value added services. The steering component 1810 is similar to or same as the steering component 1510. The steering component 1510 (shown in Figs. 15-17) may include an IP-Based Steering Rules (IBSR) module to contain the IP whitelists and the IP blacklists 1520, 1522, 1524 of the packet modifying entities.

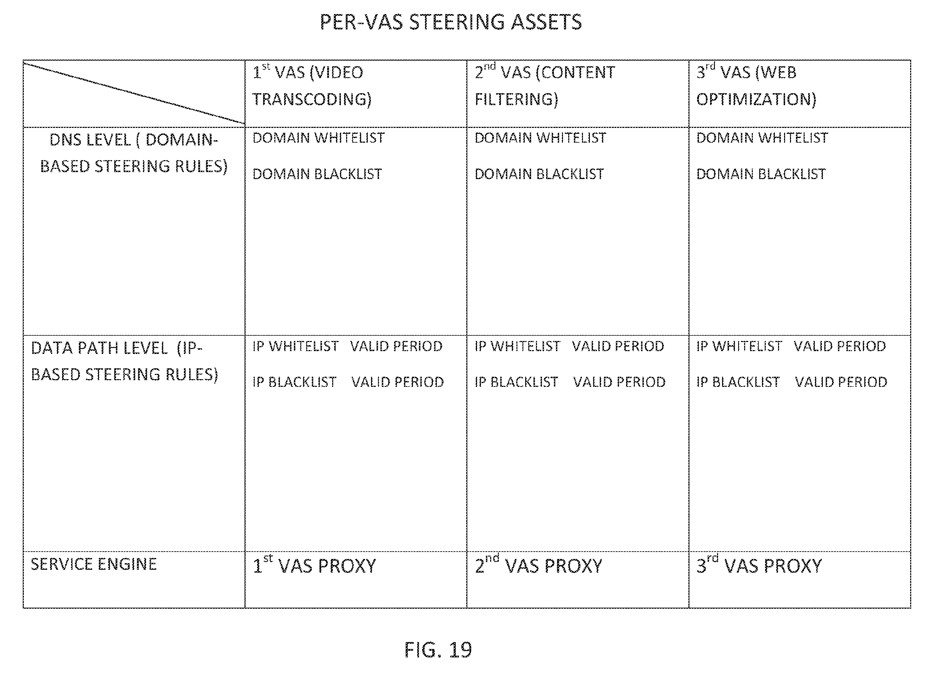

Fig. 19 depicts traffic steering assets of the traffic controller 1808 of Fig. 18 in which the assets are organized by service line, e.g., per-VAS. In the embodiment depicted in Fig. 19, the first VAS is a video transcoding VAS, the second VAS is a content filtering VAS, and the third VAS is a web optimization VAS. As depicted in Fig. 19, at the DNS level, a domain whitelist and a domain blacklist are maintained for each VAS in the Domain-Based Steering Rules (DBSR) module 1832, at the data path level, an IP whitelist and an IP blacklist are maintained for each VAS in the IP-Based Steering Rules (IBSR) module 1819, and at the service engine level, the first, second, and third VASs are implemented by corresponding first, second, and third VAS proxies 1814, 1816, 1818.

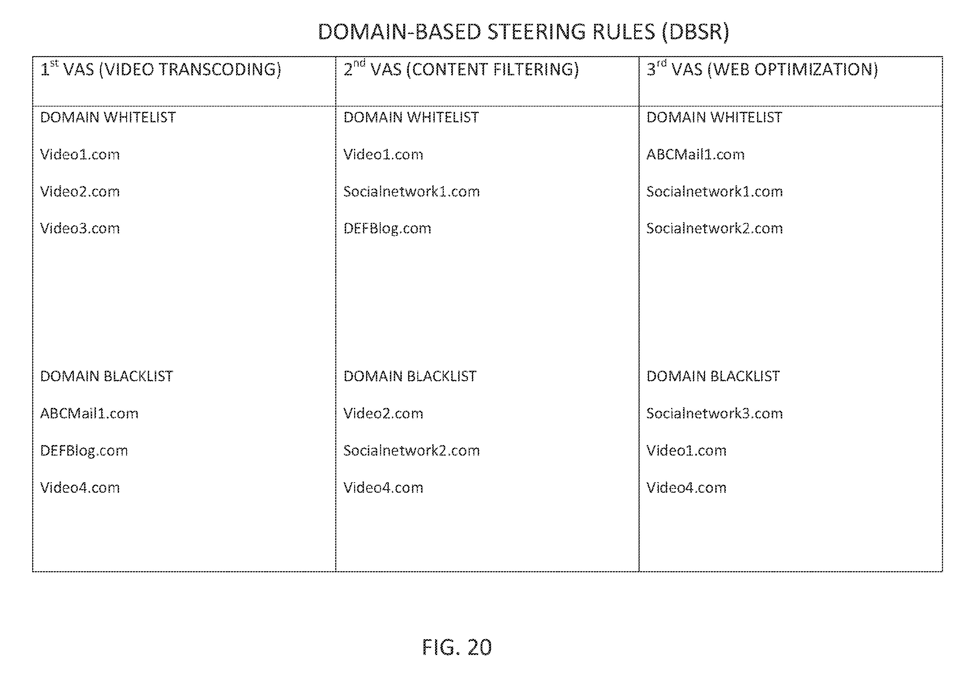

Fig. 20 depicts an embodiment of the Domain-Based Steering Rules (DBSR) module 1832 of Fig. 18, which again is organized by service line, e.g., per-VAS. Domain names that can be included on domain whitelists and on domain blacklists are not limited to the domain names illustrated in Fig. 20. Specifically, the domain names Video1.com, Video2.com, Video3.com, and Video4.com in Fig. 20 are merely used to represent exemplary domains or websites that host video content, the domain name ABCMail1.com in Fig. 20 is used merely to represent an exemplary domain or website that hosts an email application, the domain name DEFBlog.com in Fig. 20 is used merely to represent an exemplary domain or website that hosts a blogging service, and the domain names Socialnetwork1.com, Socialnetwork2.com, and Socialnetwork3.com in Fig. 20 are used merely to represent exemplary domains or websites that host social networking application.

As depicted in Fig. 20, the first VAS is a video transcoding VAS and the domain whitelist includes video domains/websites such as Video1.com, Video2.com, and Video3.com while the domain blacklist includes non-video domains/websites such as ABCMail1.com, DEFBlog.com, and a video domain/website such as Video4.com. For example, the access network in which the video transcoding VAS is located may be not interested at optimizing the delivery of video content at Video4.com, may decide that video content at Video4.com does not require additional transcoding, and/or may not receive required payment from Video4.com for being included in the valued added service. In an embodiment, the domain blacklist of the video transcoding VAS only includes non-video domains/websites.

The second VAS is a content filtering VAS and the domain whitelist includes Video1.com, Socialnetwork1.com, and DEFBlog.com while the domain blacklist includes Video2.com, Socialnetwork2.com, and Video4.com. For example, the access network in which the content filtering VAS is located may perform parental control filtering and the domains Video1.com, Socialnetwork1.com, and DEFBlog.com need to be filtered while domains Video2.com, Socialnetwork2.com, and Video4.com are appropriate for minors and do not need to be filtered.

The third VAS is a web optimization VAS and the domain whitelist includes ABCMail1.com, Socialnetwork1.com, and Socialnetwork2.com. The domain blacklist of the third VAS includes Socialnetwork3.com, Video1.com, and Video4.com. For example, the access network in which the web optimization VAS is located may have agreements with domains such as ABCMail1.com, Socialnetwork1.com, and Socialnetwork2.com to perform web optimization. In addition, the access network in which the web optimization VAS is located may find that domains such as Socialnetwork3.com, Video1.com, and Video4.com do not need to be optimized.

A domain name may be on the domain whitelists and/or domain blacklists of more than one VAS. In addition, a domain name that is on the domain whitelist of a VAS may be on the domain blacklist of another VAS. The above techniques allow for the flexible deployment of a wide variety of services. In Fig. 20, Video1.com is on the domain whitelist of the first VAS and the second VAS. Video4.com is on the domain blacklist of the first, second, and third VASs. Video1.com is on the domain whitelist of the first VAS and the second VAS and on the domain blacklist of the third VAS. In addition, DEFBlog.com is on the domain whitelist of the second VAS and on the blacklist of the first VAS. Furthermore, ABCMail1.com is on the domain whitelist of the third VAS and on the domain blacklist of the first VAS. Additionally, Socialnetwork2.com is on the domain whitelist of the third VAS and on the domain blacklist of the second VAS.

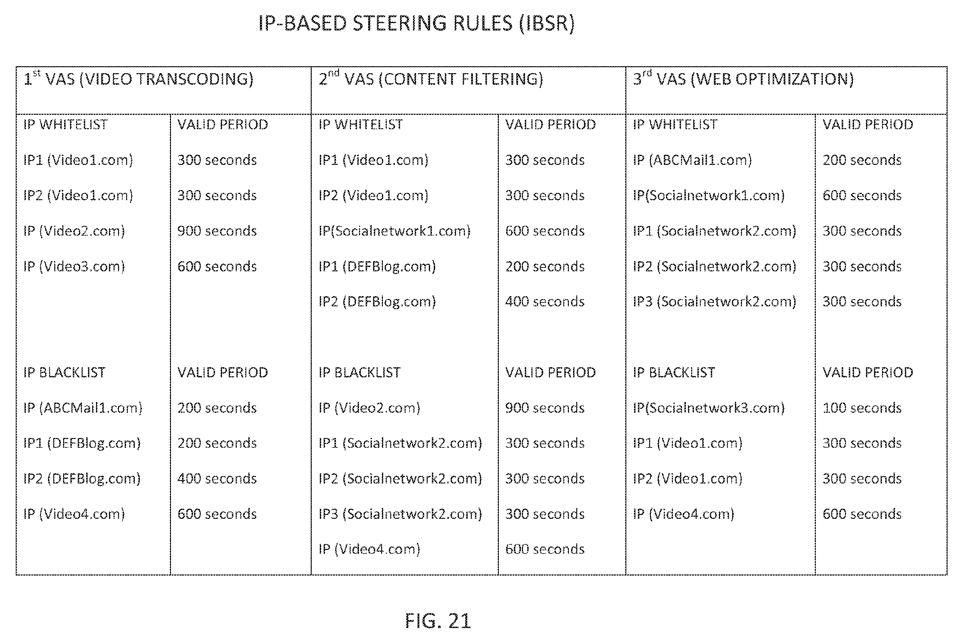

Fig. 21 depicts an embodiment of the IP-Based Steering Rules (IBSR) module 1819 of Fig. 18 that corresponds to the Domain-Based Steering Rules (DBSR) module 1832 of Fig. 20. In the embodiment depicted in Fig. 21, the first VAS is a video transcoding VAS, the second VAS is a content filtering VAS, and the third VAS is a web optimization VAS. Multiple IP addresses of a domain name may be stored in the IP whitelist or the IP blacklist of a VAS. In addition, multiple IP addresses may have the same valid periods or different valid periods. The above techniques allow for flexible and dynamic implementation of IP-based and domain-based traffic steering. For example, the IP whitelists of the first and second VASs and the blacklist of the third VAS include two IP addresses of Video1.com that are labeled as "IP1 (Video1.com)" and "IP2 (Video1.com)" and have valid periods of 300 seconds. In addition, the IP blacklist of the first VAS and the IP whitelist of the second VAS include two IP addresses of DEFBlog.com that are labeled as "IP1 (DEFBlog.com)" and "IP2 (DEFBlog.com)" and have valid periods of 200 seconds and 400 seconds, respectively. Furthermore, the IP whitelist of the third VAS and the blacklist of the second VAS include three IP addresses of Video1.com that are labeled as "IP1 (Socialnetwork2.com)," "IP2 (Socialnetwork2.com)," and "IP3 (Socialnetwork2.com)"and have valid periods of 300 seconds.

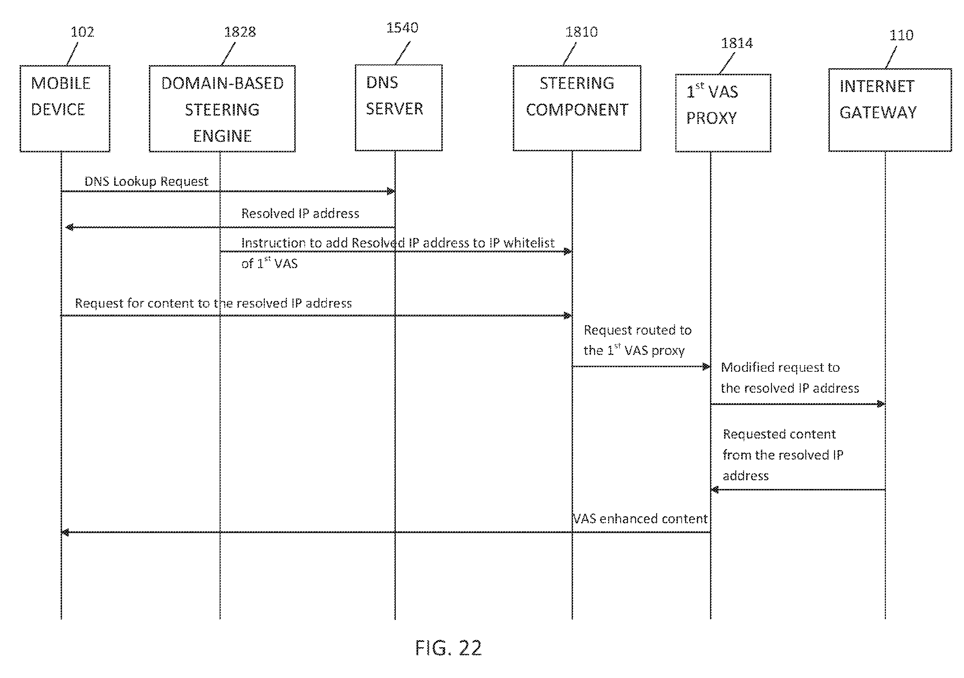

Fig. 22 illustrates an exchange of messages that is used to implement an operation of the traffic controller 1808 of Fig. 18. In a first operation, the mobile device 102 sends a DNS lookup request for a domain name to the DNS server 1540. The domain-based steering engine 1828 intercepts the DNS lookup request and compares the domain name with domain whitelists and domain blacklists of the VASs. In the embodiment depicted in Fig. 22, the domain name matches with an entry on the domain whitelist of the first VAS. The DNS server resolves the domain name into an IP address and sends the resolved IP address to the mobile device, for example, in a DNS response. The domain-based steering engine 1828 intercepts the resolved IP address and instructs the steering component to add the resolved IP address to the IP whitelist of the first VAS.

The mobile device 102 sends a request for content to a destination device using the resolved IP address as the destination IP address, which may be the IP address of the video content server 114 or of the non-video content server 116. The steering component 1810 intercepts the request, matches the destination IP address of the request with an entry on the IP whitelist of the first VAS, and routes the request to the first VAS proxy. The first VAS proxy maybe /maybe not modify the request to perform the value added service and sends the modified request to the destination device through the Internet gateway 110. In some embodiments, the request is not modified by the matched VAS proxy. In these embodiments, the matched VAS proxy simply forwards the request to the destination device. The destination device sends a response with the requested content to the mobile device 102 through the Internet gateway. The first VAS proxy performs the value added service to enhance the received content and sends the enhanced content to the mobile device. In some embodiments, the enhanced content is transmitted to the mobile device through the steering component 1810.

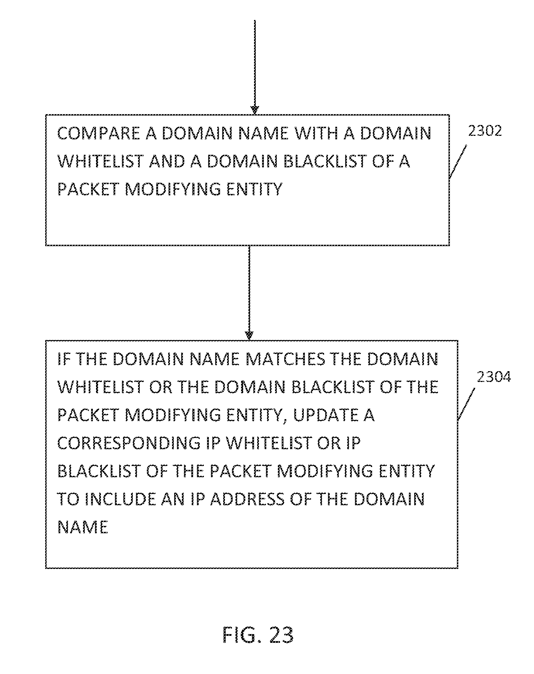

Fig. 23 is a process flow diagram of a method for domain based dynamic traffic steering in accordance with an embodiment of the invention. At block 2302, a domain name is compared with a domain whitelist and a domain blacklist of a packet modifying entity. At block 2304, if the domain name matches the domain whitelist or the domain blacklist of the packet modifying entity, a corresponding IP whitelist or IP blacklist of the packet modifying entity is updated to include an IP address of the domain name.

Embodiments of the invention may be implemented in software stored in a non-transitory computer readable medium, hardware, and/or a combination of software stored in a non-transitory computer readable medium and hardware. In an embodiment, at least one of the functionalities of the components described above is performed by a processor or a computer that executes computer readable instructions.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although specific embodiments of the invention have been described and illustrated, the invention is not to be limited to the specific forms or arrangements of parts so described and illustrated. The scope of the invention is to be defined by the claims appended hereto.

## Claims

1. A method for dynamic traffic steering in a communication network, the method comprising:
receiving a request for content from a user device (102) at a steering component (1510, 1810) and being **characterised in that** it comprises
comparing a destination Internet Protocol (IP) address in the request with at least one of an IP whitelist and an IP blacklist in the steering component (1510, 1810);
selectively steering the request, based on the comparing, by either sending the request to a service platform (1512, 1514, 1516, 1518, 1814, 1816, 1818) for onwards transmission to a content server (114) that is identified in the request if the IP address is in the IP whitelist, wherein the service platform (1512, 1514, 1516, 1518, 1814, 1816, 1818) is for receiving a response from the content server (114) to a request and modifying one or more packets carrying the response in order to send a modified response to the user device (102), or sending the request to a content server (116) that is identified in the request by by-passing the service platform (1512, 1514, 1516, 1518, 1814, 1816, 1818) if the IP address is in the IP blacklist, and
continuously updating the IP whitelist and the IP blacklist based on Domain Name System (DNS) requests that are subsequently received, wherein the updating comprises comparing a domain name in a DNS request with a domain whitelist and a domain blacklist and if the domain name matches a domain name in the domain whitelist or the domain blacklist updating the IP whitelist or the IP blacklist to include an IP address of the domain name.

2. The method of claim 1, further comprising:
receiving at the service platform (1512, 1514, 1516, 1518, 1814, 1816, 1818) a response to a request transmitted from the service platform (1512, 1514, 1516, 1518, 1814, 1816, 1818) to the content source (114);
modifying one or more packets carrying the response at the service platform (1512, 1514, 1516, 1518, 1814, 1816, 1818);
sending the modified response to the user device (102).

3. The method of claim 1 or claim 2 wherein the service platform (1512, 1514, 1516, 1518, 1814, 1816, 1818) comprises a packet modifying entity (1514, 1516, 1518, 1814, 1816, 1818).

4. The method of claim 3 wherein the packet modifying entity is a value added service proxy (1814, 1816, 1818) that performs, on received responses, at least one of: a web optimization service, a media optimization service, a content adaption service, a content filtering service, a caching service, a subscription service, an advertising service, and an antivirus service.

5. The method of any preceding claim, wherein comparing the destination IP address with at least one of the IP whitelist and the IP blacklist comprises comparing the destination IP address of the request with at least one of the IP whitelist and the IP blacklist within a Transmission Control Protocol (TCP) connection.

6. The method of claim 5 further comprising comparing a Transmission Control Protocol (TCP) port associated with the request with a predetermined TCP port.

7. Apparatus for dynamic traffic steering in a communication network, the apparatus comprising:
a steering component, the steering component comprising:
means for receiving a request for content from a user device (102) at a steering component (1510, 1810); and
being **characterised by** comprising
means for comparing a destination Internet Protocol (IP) address in the request with at least one of an IP whitelist and an IP blacklist in the steering component (1510, 1810);
means for selectively steering the request, based on the comparing, by either sending the request to a service platform (1512, 1514, 1516, 1518, 1814, 1816, 1818) for onwards transmission to a content server (114) that is identified in the request if the IP address is in the IP whitelist, wherein the service platform (1512, 1514, 1516, 1518, 1814, 1816, 1818) is for receiving a response from a content server (114) to a request and modifying one or more packets carrying the response in order to send a modified response to the user device (102), or sending the request to a content server (116) that is identified in the request by by-passing the service platform (1512, 1514, 1516, 1518, 1814, 1816, 1818) if the IP address is in the IP blacklist, and
means for continuously updating the IP whitelist and the IP blacklist based on Domain Name System (DNS) requests that are subsequently received by comparing a domain name in a DNS request with a domain whitelist and a domain blacklist and if the domain name matches a domain name in the domain whitelist or the domain blacklist updating the IP whitelist or the IP blacklist to include an IP address of the domain name.

8. The apparatus of claim 7, further comprising:
the service platform (1512, 1514, 1516, 1518, 1814, 1816, 1818), the service platform (1512, 1514, 1516, 1518, 1814, 1816, 1818) further comprising:
means for receiving at the service platform (1512, 1514, 1516, 1518, 1814, 1816, 1818) a response to a request transmitted from the service platform (1512, 1514, 1516, 1518, 1814, 1816, 1818) to the content source (114);
means for modifying one or more packets carrying the response at the service platform (1512, 1514, 1516, 1518, 1814, 1816, 1818);
means for sending the modified response to the user device (102).

9. The apparatus of claim 7 or claim 8 wherein the means for modifying the response comprises a packet modifying entity (1514, 1516, 1518, 1814, 1816, 1818).

10. The apparatus of claim 9 wherein the packet modifying entity is a value added service proxy (1814, 1816, 1818) that performs, on received responses, at least one of: a web optimization service, a media optimization service, a content adaption service, a content filtering service, a caching service, a subscription service, an advertising service, and an antivirus service.

11. The apparatus of any of claims 7 to 10, wherein the means for comparing the destination IP address with at least one of the IP whitelist and the IP blacklist comprises means for comparing the destination IP address of the request with at least one of the IP whitelist and the IP blacklist within a Transmission Control Protocol (TCP) connection.

12. The apparatus of claim 11 further comprising means for comparing a Transmission Control Protocol (TCP) port associated with the request with a predetermined TCP port.

13. A computer program comprising a set of instructions, which, when executed by a computer system causes the system to implement the method of any of claims 1 to 6.

## Patentansprüche

1. Verfahren für dynamische Verkehrssteuerung in einem Kommunikationsnetz, wobei das Verfahren Folgendes umfasst:
Empfangen einer Anforderung von Inhalt von einer Anwendervorrichtung (102) an einer Steuerungskomponente (1510, 1810) und **dadurch gekennzeichnet, dass** es Folgendes umfasst:
Vergleichen einer Ziel-Internet-Protokoll-Adresse (Ziel-IP-Adresse) in der Anforderung mit einer IP-Positivliste und/oder einer IP-Negativliste in der Steuerungskomponente (1510, 1810);
selektives Steuern der Anforderung auf der Grundlage des Vergleichs entweder durch Senden der Anforderung an eine Dienstplattform (1512, 1514, 1516, 1518, 1814, 1816, 1818) für eine weitere Übertragung an einen Inhalte-Server (114), der in der Anforderung identifiziert ist, wenn die IP-Adresse in der IP-Positivliste ist, wobei die Dienstplattform (1512, 1514, 1516, 1518, 1814, 1816, 1818) dem Empfangen einer Antwort von dem Inhalte-Server (114) auf eine Anforderung und dem Ändern von einem oder mehreren Paketen dient, die die Antwort führen, um eine geänderte Antwort an die Anwendervorrichtung (102) zu senden, oder durch Senden der Anforderung an einen Inhalte-Server (116), der in der Anforderung identifiziert ist, indem die Dienstplattform (1512, 1514, 1516, 1518, 1814, 1816, 1818) umgangen wird, wenn die IP-Adresse in der IP-Negativliste ist, und
fortlaufendes Aktualisieren der IP-Positivliste und der IP-Negativliste auf der Grundlage der Domänen-Namen-System-Anforderungen (DNS-Anforderungen), die anschließend empfangen werden, wobei das Aktualisieren das Vergleichen eines Domänen-Namens in einer DNS-Anforderung mit einer Domänen-Positivliste und einer Domänen-Negativliste und dann, wenn der Domänen-Name mit einem Domänen-Namen in der Domänen-Positivliste oder der Domänen-Negativliste übereinstimmt, das Aktualisieren der IP-Positivliste oder der IP-Negativliste, um eine IP-Adresse des Domänen-Namens aufzunehmen, umfasst.

2. Verfahren nach Anspruch 1, das ferner Folgendes umfasst:
Empfangen an der Dienstplattform (1512, 1514, 1516, 1518, 1814, 1816, 1818) einer Antwort auf eine Anforderung, die von der Dienstplattform (1512, 1514, 1516, 1518, 1814, 1816, 1818) an die Inhalte-Quelle (114) übertragen wurde;
Ändern von einem oder mehreren Paketen, die die Antwort führen, an der Dienstplattform (1512, 1514, 1516, 1518, 1814, 1816, 1818) und
Senden der geänderten Antwort an die Anwendervorrichtung (102).

3. Verfahren nach Anspruch 1 oder Anspruch 2, wobei die Dienstplattform (1512, 1514, 1516, 1518, 1814, 1816, 1818) eine Einheit (1514, 1516, 1518, 1814, 1816, 1818) zum Ändern von Paketen umfasst.

4. Verfahren nach Anspruch 3, wobei die Einheit zum Ändern von Paketen ein Mehrwertdienst-Proxy (1814, 1816, 1818) ist, der auf empfangene Antworten einen Web-Optimierungsdienst und/oder einen Medien-Optimierungsdienst und/oder einen Inhalte-Anpassungsdienst und/oder einen Inhalte-Filterungsdienst und/oder einen Zwischenspeicherungsdienst und/oder einen Subskriptionsdienst und/oder einen Werbedienst und/oder einen Antivirendienst durchführt.

5. Verfahren nach einem der vorhergehenden Ansprüche, wobei das Vergleichen der Ziel-IP-Adresse mit der IP-Positivliste und/oder der IP-Negativliste das Vergleichen der Ziel-IP-Adresse der Anforderung mit der IP-Positivliste und/oder der IP-Negativliste innerhalb einer Übertragungssteuerungsprotokollverbindung (TCP-Verbindung) umfasst.

6. Verfahren nach Anspruch 5, das ferner das Vergleichen eines Übertragungssteuerungsprotokoll-Ports (TCP-Ports), der der Anforderung zugeordnet ist, mit einem vorgegebenen TCP-Port umfasst.

7. Einrichtung zur dynamischen Verkehrssteuerung in einem Kommunikationsnetz, wobei die Einrichtung Folgendes umfasst:
eine Steuerungskomponente, wobei die Steuerungskomponente Folgendes umfasst:
Mittel zum Empfangen einer Anforderung von Inhalt von einer Anwendervorrichtung (102) an einer Steuerungskomponente (1510, 1810) und
**dadurch gekennzeichnet, dass** sie Folgendes umfasst:
Mittel zum Vergleichen einer Ziel-Internet-Protokoll-Adresse (Ziel-IP-Adresse) in der Anforderung mit einer IP-Positivliste und/oder einer IP-Negativliste in der Steuerungskomponente (1510, 1810);
Mittel zum selektiven Steuern der Anforderung auf der Grundlage des Vergleichs entweder durch Senden der Anforderung an eine Dienstplattform (1512, 1514, 1516, 1518, 1814, 1816, 1818) für eine weitere Übertragung an einen Inhalte-Server (114), der in der Anforderung identifiziert ist, wenn die IP-Adresse in der IP-Positivliste ist, wobei die Dienstplattform (1512, 1514, 1516, 1518, 1814, 1816, 1818) dem Empfangen einer Antwort von einem Inhalte-Server (114) auf eine Anforderung und dem Ändern von einem oder mehreren Paketen dient, die die Antwort führen, um eine geänderte Antwort an die Anwendervorrichtung (102) zu senden, oder durch Senden der Anforderung an einen Inhalte-Server (116), der in der Anforderung identifiziert ist, indem die Dienstplattform (1512, 1514, 1516, 1518, 1814, 1816, 1818) umgangen wird, wenn die IP-Adresse in der IP-Negativliste ist, und
Mittel zum fortlaufenden Aktualisieren der IP-Positivliste und der IP-Negativliste auf der Grundlage der Domänen-Namen-System-Anforderungen (DNS-Anforderungen), die anschließend empfangen werden, durch Vergleichen eines Domänen-Namens in einer DNS-Anforderung mit einer Domänen-Positivliste und einer Domänen-Negativliste und dann, wenn der Domänen-Name mit einem Domänen-Namen in der Domänen-Positivliste oder der Domänen-Negativliste übereinstimmt, das Aktualisieren der IP-Positivliste oder der IP-Negativliste, um eine IP-Adresse des Domänen-Namens aufzunehmen.

8. Einrichtung nach Anspruch 7, die Folgendes umfasst:
die Dienstplattform (1512, 1514, 1516, 1518, 1814, 1816, 1818), wobei die Dienstplattform (1512, 1514, 1516, 1518, 1814, 1816, 1818) ferner Folgendes umfasst:
Mittel zum Empfangen einer Antwort an der Dienstplattform (1512, 1514, 1516, 1518, 1814, 1816, 1818) auf eine Anforderung, die von der Dienstplattform (1512, 1514, 1516, 1518, 1814, 1816, 1818) an die Inhalte-Quelle (114) übertragen wurde;
Mittel zum Ändern von einem oder mehreren Paketen, die die Antwort führen, an der Dienstplattform (1512, 1514, 1516, 1518, 1814, 1816, 1818) und
Mittel zum Senden der geänderten Antwort an die Anwendervorrichtung (102).

9. Einrichtung nach Anspruch 7 oder Anspruch 8, wobei die Mittel zum Ändern der Antwort eine Einheit (1514, 1516, 1518, 1814, 1816, 1818) zum Ändern von Paketen umfassen.

10. Einrichtung nach Anspruch 9, wobei die Einheit zum Ändern von Paketen ein Mehrwertdienst-Proxy (1814, 1816, 1818) ist, der auf empfangene Antworten mindestens einen Web-Optimierungsdienst und/oder einen Medien-Optimierungsdienst und/oder einen Inhalte-Anpassungsdienst und/oder einen Inhalte-Filterungsdienst und/oder einen Zwischenspeicherungsdienst und/oder einen Subskriptionsdienst und/oder einen Werbedienst und/oder einen Antivirendienst durchführt.

11. Einrichtung nach einem der Ansprüche 7 bis 10, wobei die Mittel zum Vergleichen der Ziel-IP-Adresse mit der IP-Positivliste und/oder der IP-Negativliste Mittel zum Vergleichen der Ziel-IP-Adresse der Anforderung mit der IP-Positivliste und/oder der IP-Negativliste innerhalb einer Übertragungssteuerungsprotokollverbindung (TCP-Verbindung) umfasst.

12. Einrichtung nach Anspruch 11, die ferner Mittel zum Vergleichen eines Übertragungssteuerungsprotokoll-Ports (TCP-Ports), der der Anforderung zugeordnet ist, mit einem vorgegebenen TCP-Port umfasst.

13. Computerprogramm, das einen Satz von Anweisungen umfasst, die dann, wenn sie durch ein Computersystem ausgeführt werden, bewirken, dass das System das Verfahren nach einem der Ansprüche 1 bis 6 implementiert.

## Revendications

1. Procédé d'orientation dynamique du trafic dans un réseau de communication, le procédé comprenant :
la réception d'une requête de contenu émanant d'un dispositif utilisateur (102) dans un élément d'orientation (1510, 1810)
et **caractérisé en ce qu'**il comprend
la comparaison d'une adresse de protocole Internet (IP) de destination dans la requête avec au moins soit une liste blanche IP, soit une liste noire IP dans l'élément d'orientation (1510, 1810) ;
l'orientation sélective de la requête, sur la base de la comparaison, soit par l'envoi de la requête à une plateforme de services (1512, 1514, 1516, 1518, 1814, 1816, 1818) pour transmission ultérieure à un serveur de contenu (114) qui est identifié dans la requête si l'adresse IP figure dans la liste blanche IP, la plateforme de services (1512, 1514, 1516, 1518, 1814, 1816, 1818) étant conçue pour recevoir une réponse du serveur de contenu (114) à une requête et pour modifier un ou plusieurs paquets transportant la réponse afin d'envoyer une réponse modifiée au dispositif utilisateur (102), soit par l'envoi de la requête à un serveur de contenu (116) qui est identifié dans la requête en contournant la plateforme de services (1512, 1514, 1516, 1518, 1814, 1816, 1818) si l'adresse IP figure dans la liste noire IP, et
la mise à jour en continu de la liste blanche IP et de la liste noire IP sur la base de requêtes du type système de noms de domaines (DNS) qui sont reçues par la suite, la mise à jour comprenant la comparaison d'un nom de domaine d'une requête DNS avec une liste blanche de domaines et une liste noire de domaines et si le nom de domaine coïncide avec un nom de domaine de la liste blanche de domaines ou de la liste noire de domaines, la mise à jour de la liste blanche IP ou de la liste noire IP pour inclure une adresse IP du nom de domaine.

2. Procédé selon la revendication 1, comprenant en outre :
la réception dans la plateforme de services (1512, 1514, 1516, 1518, 1814, 1816, 1818) d'une réponse à une requête transmise par la plateforme de services (1512, 1514, 1516, 1518, 1814, 1816, 1818) à la source de contenu (114) ;
la modification d'un ou plusieurs paquets transportant la réponse dans la plateforme de services (1512, 1514, 1516, 1518, 1814, 1816, 1818) ;
l'envoi de la réponse modifiée au dispositif utilisateur (102).

3. Procédé selon la revendication 1 ou la revendication 2 dans lequel la plateforme de services (1512, 1514, 1516, 1518, 1814, 1816, 1818) comprend une entité de modification de paquet (1514, 1516, 1518, 1814, 1816, 1818).

4. Procédé selon la revendication 3 dans lequel l'entité de modification de paquet est un proxy de service à valeur ajoutée (1814, 1816, 1818) qui effectue, sur les réponses reçues, au moins un des services suivants : un service d'optimisation Web, un service d'optimisation de médias, un service d'adaptation de contenus, un service de filtrage de contenus, un service de mise en antémémoire, un service d'abonnement, un service publicitaire et un service antivirus.

5. Procédé selon l'une quelconque des revendications précédentes, dans lequel la comparaison de l'adresse IP de destination avec au moins soit la liste blanche IP, soit la liste noire IP comprend la comparaison de l'adresse IP de destination de la requête avec au moins soit la liste blanche IP, soit la liste noire IP lors d'une connexion de type protocole de contrôle de transmission (TCP).

6. Procédé selon la revendication 5 comprenant en outre la comparaison d'un port de protocole de contrôle de transmission (TCP) associé à la requête avec un port TCP prédéterminé.

7. Dispositif d'orientation dynamique du trafic dans un réseau de communication, l'appareil comprenant :
un élément d'orientation, l'élément d'orientation comprenant :
des moyens pour recevoir une requête de contenu émanant d'un dispositif utilisateur (102) dans un élément d'orientation (1510, 1810) ; et
**caractérisé en ce qu'**il comprend
des moyens pour comparer une adresse de protocole Internet (IP) de destination dans la requête avec au moins soit une liste blanche IP, soit une liste noire IP dans l'élément d'orientation (1510, 1810) ;
des moyens pour orienter sélectivement la requête, sur la base de la comparaison, soit par l'envoi de la requête à une plateforme de services (1512, 1514, 1516, 1518, 1814, 1816, 1818) pour transmission ultérieure à un serveur de contenu (114) qui est identifié dans la requête si l'adresse IP figure dans la liste blanche IP, la plateforme de services (1512, 1514, 1516, 1518, 1814, 1816, 1818) étant conçue pour recevoir une réponse d'un serveur de contenu (114) à une requête et pour modifier un ou plusieurs paquets transportant la réponse afin d'envoyer une réponse modifiée au dispositif utilisateur (102), soit par l'envoi de la requête à un serveur de contenu (116) qui est identifié dans la requête en contournant la plateforme de services (1512, 1514, 1516, 1518, 1814, 1816, 1818) si l'adresse IP figure dans la liste noire IP, et
des moyens pour mettre à jour en continu la liste blanche IP et la liste noire IP sur la base de requêtes du type système de noms de domaines (DNS) qui sont reçues par la suite, en comparant un nom de domaine d'une requête DNS avec une liste blanche de domaines et une liste noire de domaines et si le nom de domaine coïncide avec un nom de domaine de la liste blanche de domaines ou de la liste noire de domaines, en mettant à jour la liste blanche IP ou la liste noire IP pour inclure une adresse IP du nom de domaine.

8. Dispositif selon la revendication 7, comprenant en outre :
la plateforme de services (1512, 1514, 1516, 1518, 1814, 1816, 1818), la plateforme de services (1512, 1514, 1516, 1518, 1814, 1816, 1818) comprenant en outre :
des moyens pour recevoir dans la plateforme de services (1512, 1514, 1516, 1518, 1814, 1816, 1818) une réponse à une requête transmise par la plateforme de services (1512, 1514, 1516, 1518, 1814, 1816, 1818) à la source de contenu (114) ;
des moyens pour modifier un ou plusieurs paquets transportant la réponse dans la plateforme de services (1512, 1514, 1516, 1518, 1814, 1816, 1818) ;
des moyens pour envoyer la réponse modifiée au dispositif utilisateur (102).

9. Dispositif selon la revendication 7 ou la revendication 8 dans lequel les moyens pour modifier la réponse comprennent une entité de modification de paquet (1514, 1516, 1518, 1814, 1816, 1818).

10. Dispositif selon la revendication 9 dans lequel l'entité de modification de paquet est un proxy de service à valeur ajoutée (1814, 1816, 1818) qui effectue, sur les réponses reçues, au moins un des services suivants : un service d'optimisation Web, un service d'optimisation de médias, un service d'adaptation de contenus, un service de filtrage de contenus, un service de mise en antémémoire, un service d'abonnement, un service publicitaire et un service antivirus.

11. Dispositif selon l'une quelconque des revendications 7 à 10, dans lequel les moyens pour comparer l'adresse IP de destination avec au moins soit la liste blanche IP, soit la liste noire IP comprennent des moyens pour comparer l'adresse IP de destination de la requête avec au moins soit la liste blanche IP, soit la liste noire IP dans une connexion de type protocole de contrôle de transmission (TCP).

12. Appareil selon la revendication 11 comprenant en outre des moyens pour comparer un port de protocole de contrôle de transmission (TCP) associé à la requête avec un port TCP prédéterminé.

13. Produit programme d'ordinateur comprenant un ensemble d'instructions et qui, lorsqu'il est exécuté par un système d'ordinateur, assure la mise en oeuvre par le système du procédé selon l'une quelconque des revendications 1 à 6.
